# EUROPEAN PATENT APPLICATION

(11) **EP 1 431 788 A2**
(43) Date of publication of application: **23.06.2004**
(21) Application number: 03029215.5
(22) Date of filing: 18.12.2003
(51) Int. Cl.: G02B 6/42

(54) **Optical transceiver module and a method of fabricating the same**

(30) Priority: 18.12.2002 JP 2002367088
(71) Applicant: TDK Corporation, Chuo-ku, Tokyo 103-8272 (JP)
(72) Inventor: Lo, Adrian Wing Fai c/o TDK Corporation, Tokyo 103-8272 (JP); Hata, Kenjiro c/o TDK Corporation, Tokyo 103-8272 (JP); Kineri, Tohru c/o TDK Corporation, Tokyo 103-8272 (JP); Hanashima, Naoki c/o TDK Corporation, Tokyo 103-8272 (JP)
(74) Representative: HOFFMANN - EITLE

(57) **Abstract**

The present invention realizes miniaturization, low cost and improvement of fabricating efficiency of an optical module.

The optical module 100 has a PD platform 110 and an LE platform 120 which are mounted on a die pad 101. The optical module 100 includes two transceiver units 100A and 100B, and each unit works as an independent element of the optical module. The PD platform 110 and the LE platform 120 are used in common by the two transceiver units 100A and 100B. The components of the two transceivers 100A and 100B are mounted on a single PD platform and a single LE platform.

## Description

### BACKGROUND OF THE INVENTION

The present invention relates to an optical module and a method of fabricating the same, and more particularly, to an optical module which can be produced by an easy process and at low cost, and a method of fabricating the same.

### THE PRIOR ART

The advent of the Internet allows one to access and manipulate huge quantities of information in real time. Copper wire, optical fiber, wireless means and the like are used to send and receive information. Optical fiber is especially superior for transmitting huge volumes of information at high speed. Thus, it is expected the optical fiber will be extended into every household in the future.

However, when connecting terminal devices by optical fibers, it is necessary to provide a so-called optical module between the optical fiber and each terminal device, since terminal devices do not use optical signals but electric signals for information processing. The optical module transforms optical signals received from the optical fiber into electric signals for processing by the terminal device; and also transforms electric signals received from the terminal device into optical signals for input into the optical fiber. Various types of optical modules have been proposed in the art.

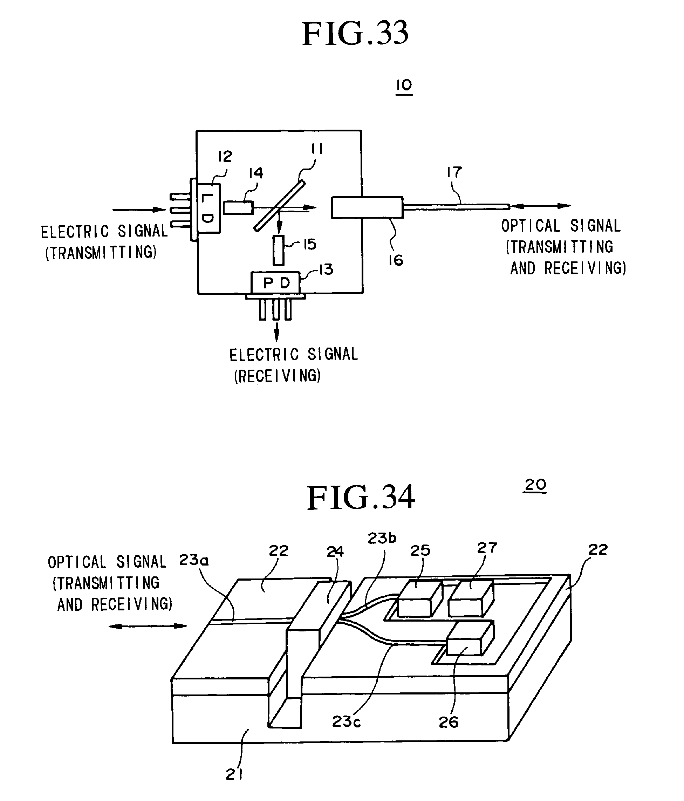

Fig. 33 is a schematic view showing the structure of a conventional optical module.

As shown in Fig. 33, the optical module 10 can transmit and receive signals in the WDM (wavelength division multiplex) mode. The optical module has a typical structure wherein a WDM filter 11, a laser diode (LD) 12, a photo diode (PD) 13 and optical lens 14 and 15 are contained in a package 16. The WDM filter 11 is an optical filter that passes light of a predetermined wavelength (for example, about 1.3 µm) used for transmission and reflects light of a predetermined wavelength (for example about 1.55 µm) used for reception, and it is positioned on the optical path. The laser diode 12 is an element for transforming a supplied electric signal into an optical signal. Light of the predetermined wavelength of, for example, about 1.3 µm emitted from the laser diode 12 is supplied to an optical fiber 17 through the optical lens 14 and the WDM filter 11. The photo-diode 13 is an element for transforming a received optical signal into an electric signal. Light of the predetermined wavelength of, for example, about 1.55 µm supplied from the optical fiber 17 is reflected by the WDM filter 11 and sent to the photo-diode 13 through the optical lens 15, and is transformed into electric signal. It is therefore possible to transform the optical signals from the optical fiber 17 and supply them to the terminal device, and transform the electric signals from the terminal device and supply them to the optical filter 17.
The above example of the light wavelengths assumes that the optical module 10 shown in Fig.33 is installed in a terminal device used in a home. If the optical module 10 is used in the base station, the wavelengths used for transmission and reception are reversed.

Fabrication of the optical module 10 of the type shown in Fig. 33 requires high accuracy in the positioning the individual elements, and, in some cases, fine tuning by a skilled worker. For this reason, there is a problem that manufacturing efficiency is low, so that the module is not suitable for mass production.

Fig.34 is a schematic view showing the structure of another conventional optical module.

The optical module 20 shown in Fig. 34 is a so-called optical waveguide embedded type optical module. The optical module 20 comprises a substrate 21, a cladding layer 22 formed on the substrate 21, core regions 23a-23c formed on a predetermined region of the cladding layer 22, a WDM filter 24 inserted in the slot formed on the substrate 21 and the cladding layer 22, a laser diode 25 provided adjacent to the end of the core region 23b, a photo-diode 26 provided adjacent to the end of core region 23c, and a monitoring photo-diode 27 which monitors the output of the laser diode 25. In the optical module 20 of such type, an optical waveguide constituted by the cladding layer 22 and core region 23a is connected to an optical fiber not shown in the drawing. Accordingly, WDM (wavelength division multiplex) technology is used to allow transmission and reception in the same fiber

That is, light of the transmission wavelength (for example, about 1.3 µm) emitted from the laser diode 25 propagates through an optical waveguide consisting of the cladding layer 22 and the core region 23b, after which it is supplied to the optical waveguide consisting of the cladding layer 22 and the core region 23a through the WDM filter 24, and enters an optical fiber that is not illustrated. Moreover, light of the reception wavelength (for example, about 1.55 µm) supplied from the optical fiber (not shown) propagates through the optical waveguide consisting of the cladding layer 22 and core region 23a, after which it is supplied to the optical waveguide which consisting of the cladding layer 22 and core region 23c through the WDM filter 24, and enters the photo-diode 26. The output of the laser diode 25 is monitored by the monitoring photo-diode 27 to achieve stable, optimized output from laser diode 25.

The optical module 20 of the type described above is smaller than the optical module 10 of the type shown in Fig. 33, and it has high productivity because it does not require the fine tuning by a skilled worker.

However, there is a problem that it is very expensive and requires high connection accuracy between the optical fiber and the optical waveguide.

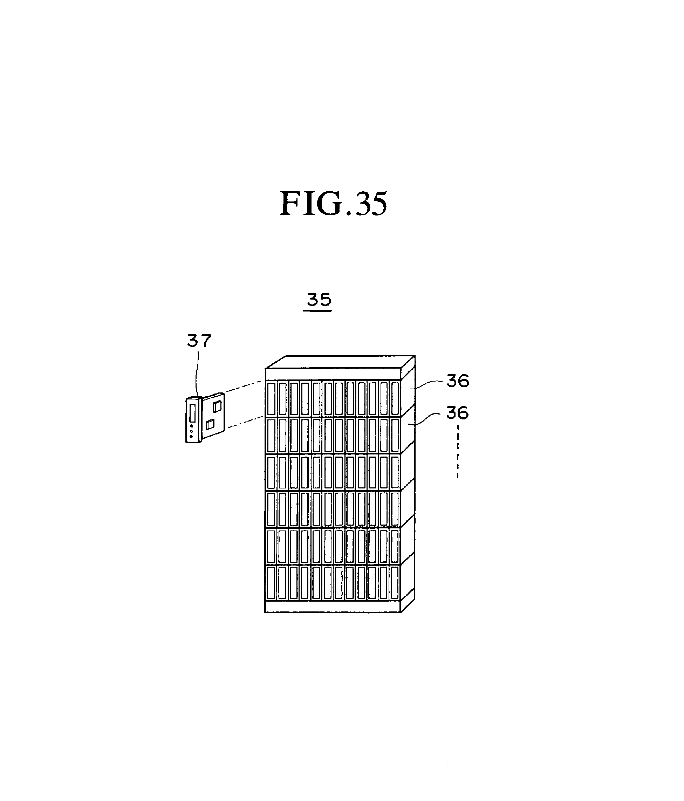

Fig.35 is a schematic view showing a typical system configuration installed at the CO (Central Office) in an optical fiber network. As shown in Fig. 35, the system comprises a large number of ONUs (Optical Network Units)37 that are slotted into a rack 36 which can be stacked up several levels high. The ONU 37 is a network card including the above optical module and a wired LAN card. It is clear that a reduction in the physical size of the ONU can provide significant space savings at the CO. On the other hand, it is generally known that transceiver modules can account for more than half of the hardware cost of a FTTH (Fiber-To-The-Home) network. Some optical module designs utilize two optical fibers, one for transmitting the outgoing signals and the other for receiving the incoming signals. To reduce cost further, recent designs use one fiber for bi-directional transmission (upstream and downstream direction). However, this is not efficient for reducing hardware cost.

As explained above, the prior art optical module has certain problems such as low manufacturing efficiency because it requires fine tuning by a skilled worker and is very expensive. Furthermore, there are problems that the system is enlarged and becomes high in cost when a large number of ONUs including the conventional optical module are installed in the CO. Thus, an optical module fabricated by an easy process at low cost is desired.

### SUMMARY OF THE INVENTION

It is therefore an object of the present invention to provide an improved optical module and a method of fabricating the same.

Another object of the present invention is to provide an optical module and a method of fabricating the same that can realize miniaturization and low cost.

Another object of the present invention is to provide an optical module that can be fabricated by an easy process and a method of fabricating the same.

The above and other objects can be accomplished by an optical module for transmitting and receiving an optical signal comprising a die pad, at least one platform body mounted on the die pad, two or more transceiver units mounted on the platform body, and an encapsulation member which covers at least part of the platform body and part of the die pad, wherein each transceiver unit includes an optical fiber fixed on the platform, a receiving photo-diode that is mounted on the platform body and transforms optical signals received through the optical fiber into electric signals, a light emitter that is mounted on the platform body and generates optical signals to be transmitted through the optical fiber, a filter provided so that the optical fiber is divided at a position between the receiving photo-diode and the light emitter, and a ferrule in which the end of the optical fiber is inserted.

According to the present invention, since the platform bodies on which the receiving photo-diode and the light emitter are mounted are further mounted on the die pad after which these are covered by the encapsulating member, the optical module is therefore very easy to handle. Further, since, differently from the conventional optical module, the optical module does not require fine tuning by a skilled worker, it has high fabrication efficiency. It is possible to realize relatively low cost, which is not possible with the optical module including the conventional optical waveguide. Furthermore, it is possible to provide a multi-channel optical module which has two or more transceiver units in one package. It is therefore possible to miniaturize the overall size of the ONU or the like, which are equipped many optical modules, to improve the mounting efficiency, and to realize low cost.

In a preferred aspect of the present invention, the optical module further comprises silicone gel which covers at least part of the optical fiber, the receiving photo-diode, the light emitter or the filter. According to this aspect of the present invention, it is possible to protect the optical fiber, the receiving photo-diode, the light emitter or the filter efficiently.

In a preferred aspect of the present invention, the optical module further comprises one or more ICs which receive the output signals from the receiving photo-diode and process the output signals and/or drive the light emitter. In this case, the IC may be mounted on the PD platform body, and may also be mounted on the die pad.

In a preferred aspect of the present invention, the platform body includes a PD platform body on which the receiving photo-diode is mounted and an LE platform body on which the light emitter is mounted. According to this aspect of the present invention, it is easy to design the PD platform and the LE platform separately. Further, by mounting the PD platform and the LE platform separately, it is easy to control temperature at each process of fabrication. For example, if the LE platform is first mounted on the die pad and the PD platform is then mounted, the parts on the PD platform 110 will not be affected by the heat imparted when mounting the light emitter and the like. Further, if the PD platform is mounted after mounting the LE platform on die pad and a screening test is then performed, it is not necessary to perform needless processing on a product in process that has an initial failure, and it is therefore possible to reduce manufacturing cost. The PD platform body and the LE platform body may be arranged on the die pad in parallel, or the PD platform may be mounted on the LE platform. At any rate, if the PD platform is mounted after mounting the LE platform on the die pad and a screening test is then performed, it is not necessary to perform needless processing on a product in process that has an initial failure.

In a preferred aspect of the present invention, the transceiver unit further comprises a monitoring photo-diode which is mounted on the LE platform body and used for monitoring the luminescence intensity of the light emitter. According to this aspect of the present invention, it is possible not only to optimize the luminescence intensity of the light emitter but also to perform the screening test easily.

In a preferred aspect of the present invention, at least two transceiver units among the two or more transceiver units are arranged in parallel and oriented in the same direction. According to this aspect of the present invention, it is possible to install the optical fibers collectively into the ferrules in the case that at least two optical fibers to be connected to the transceiver unit are inserted from the same direction into the transceiver unit.

In a preferred aspect of the present invention, the PD platform body and the LE platform body are provided commonly for at least two transceiver units. According to this aspect of the present invention, since the PD platform and the LE platform are provided as a common platform, respectively, for two or more transceiver units, it is possible to miniaturize the multi-channel optical module, reduce the cost of the optical module and improve the fabrication efficiency of the optical module.

In a preferred aspect of the present invention, at least two transceiver units among the two or more transceiver units are arranged in series and oriented in opposite directions. According to this aspect of the present invention, it is possible to install the optical fibers collectively into the ferrules in a case where at least two optical fibers to be connected to the transceiver unit are inserted from opposite directions into the transceiver unit.

In a preferred aspect of the present invention, the PD platform body is provided separately for each transceiver unit and the LE platform body is provided in common for the transceiver units. According to this aspect of the present invention, since the LE platform is provided as a common platform to the two or more transceiver units, it is possible to miniaturize the multi-channel optical module, reduce the cost of the optical module and improve the fabrication efficiency of the optical module.

In a preferred aspect of the present invention, the filter consists of one filter common to the transceiver units. According to this aspect of the present invention, since one filter is used in common by the transceiver units, it is possible to reduce the cost of the optical module and improve the fabrication efficiency of the optical module.

In a preferred aspect of the present invention, the receiving photo-diode is a photo-diode array common to the transceiver units. According to this aspect of the present invention, since one arrayed element is used in common by the transceiver units, it is possible to reduce the cost of the optical module and improve the fabrication efficiency of the optical module.

In a preferred aspect of the present invention, the light emitter is provided as a light emitter array common to the transceiver units. According to this aspect of the present invention, since one arrayed element is used in common by the transceiver units, it is possible to reduce the cost of the optical module and improve the fabrication efficiency of the optical module.

In a preferred aspect of the present invention, the monitoring photo-diode is a photo-diode array common to the transceiver units. According to this aspect of the present invention, since one arrayed element is used in common by the transceiver units, it is possible to reduce the cost of the optical module and improve the fabrication efficiency of the optical module.

The above and other objects can also be accomplished by a method of fabricating an optical module for transmitting and receiving optical signals comprising the steps of mounting on a die pad an LE platform equipped with at least a light emitter which generates optical signals to be transmitted, mounting on the die pad or the LE platform a PD platform equipped with two or more optical fibers, at least one receiving photo-diode that performs photoelectric conversion of an optical signal received through the optical fibers, at least one filter that separates the optical signal received from the optical signal to be transmitted, and two or more ferrules in which the ends of the optical fibers are inserted, and encapsulating the LE platform and the PD platform with an encapsulation member so that the ends of the ferrules are exposed.

According to the present invention, since the LE platform comprising the light emitter and the PD platform comprising the receiving photo-diode are mounted on the die pad after which these are covered by the encapsulating member, the optical module is very easy to handle. Further, since, differently from the conventional optical module, the optical module does not require fine tuning by a skilled worker, it has high fabrication efficiency. The optical module can be realized at relatively low cost, which is not possible with the optical module including a conventional optical waveguide. Furthermore, it is possible to provide a multi-channel optical module which has two or more transceiver units in one package. It is therefore possible to miniaturize the overall size of an ONU or the like which is equipped with many optical modules, to improve the mounting efficiency, and to realize low cost.

In a preferred aspect of the present invention, the method of fabricating an optical module further comprises a step of performing a screening test after mounting the LE platform on the die pad, and mounting the PD platform on the die pad after the screening test.

In a preferred aspect of the present invention, the method of fabricating an optical module further comprises a step of applying silicon gel to cover at least part of the optical fiber, the receiving photo-diode, the light emitter or the filter. The above and other objects and features of the present invention will become apparent from the following description made with reference to the accompanying drawings.

### BRIEF DESCRIPTION OF THE DRAWINGS

Fig. 1 is a simplified perspective view schematically showing the structure of an optical module 100 according to one preferred embodiment of the present invention.
Fig.2 is a schematic partial plan view showing the structure of the transceiver units 100A and 100B of the optical module 100 illustrated in Fig.1.
Fig. 3 is a side view partially showing the structure of the transceiver units 100A and 100B of the optical module 100 illustrated in Fig.1.
Fig.4 is a perspective view schematically showing the structure of the PD platform 110.
Fig.5 is a perspective view schematically showing the structure of the LE platform 120.
Fig.6 (a) is a schematic top view showing the exterior of the optical module 100 according to this embodiment.
Fig.6 (b) is a schematic cross sectional view taken along line A-A of Fig.5 (a).
Fig.7 is a schematic top view showing the optical module 100 mounted on the printed circuit board and the like.
Fig.8 is a diagram showing a process for fabricating the optical module 100 (preparing of lead frame 105).
Fig.9 is a diagram showing a process for fabricating the optical module 100 (pre-mold).

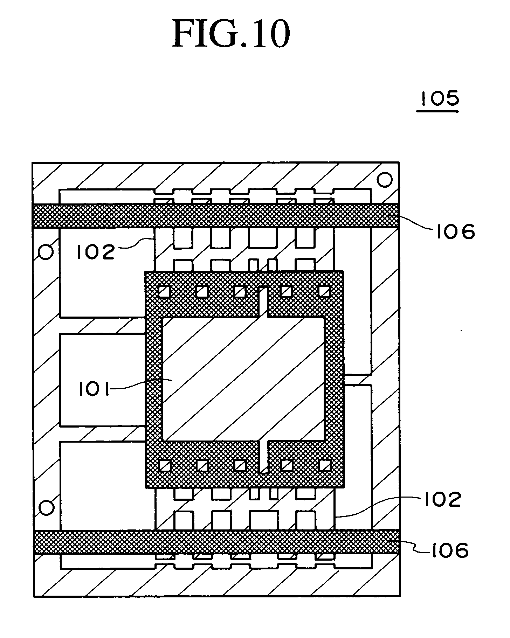

Fig.10 is a diagram showing a process for fabricating the optical module 100 (cutting predetermined portions 105b, 105c and 105d of the lead frame 105).
Fig.11 is a diagram showing a process for fabricating the optical module 100 (mounting LE platform 120).
Fig.12 is a diagram showing a process for fabricating the optical module 100 (mounting PD platform 110).
Fig.13 is a simplified perspective view schematically showing the structure of an optical module 200 according to another preferred embodiment of the present invention.
Fig.14 is a plan view schematically showing the structure of an optical module 300 according to another preferred embodiment of the present invention.
Fig.15 is a plan view schematically showing the structure of an optical module 400 according to another preferred embodiment of the present invention.
Fig.16 is a side view schematically showing the structure of the optical module 400.
Fig.17 is a plan view schematically showing the structure of an optical module 500 according to another preferred embodiment of the present invention.
Fig. 18 is a side view schematically showing the structure of the optical module 500.
Fig.19 is a plan view schematically showing the structure of an optical module 600 according to another preferred embodiment of the present invention.
Fig.20 is a side view schematically showing the structure of the optical module 600.
Fig.21 (a) is a schematic top view showing the exterior of an optical module 700 according to another preferred embodiment of the present invention.
Fig.21 (b) is a schematic cross sectional view taken along line B-B of Fig.21 (a).
Fig.22 (a) is a schematic top view showing the exterior of an optical module 800 according to another embodiment of the present invention.
Fig.22 (b) is a schematic cross sectional view taken along line C-C of Fig.22 (a).
Fig.23 is an external view showing one preferred embodiment of the optical connector including the optical module according to the present invention.
Fig.24 is an external view showing another preferred embodiment of the optical connector including the optical module according to the present invention.
Fig.25 is a top plan view showing an optical module 1000 according to an embodiment in which the PD platform and the LE platform are mounted on a printed circuit board.
Fig.26 is a bottom view showing an optical module 1000 according to an embodiment in which the PD platform and the LE platform are mounted on a printed circuit board.
Fig.27 is a top plan view showing the resin encapsulated optical module according to this embodiment.
Fig.28 is a side view showing the resin encapsulated optical module according to this embodiment.
Fig.29 (a) is a perspective view showing an optical module having four transceiver units according to another preferred embodiment of the present invention, especially WDM filters, photo-diodes and light emitters are installed separately for each unit.
Fig.29 (b) is a perspective view showing an optical module having four transceiver units according to another preferred embodiment of the present invention, especially WDM filters, photo-diodes and light emitters are constituted as common for each unit.
Fig.30 is a perspective view schematically showing the structure of an optical module 1300 according to another preferred embodiment of the present invention.
Fig.31 is an external view showing another preferred embodiment of the optical connector including the optical module shown in Fig. 30.
Fig. 32 is a perspective view schematically showing the structure of an optical module 1400 according to another preferred embodiment of the present invention.
Fig.33 is a schematic view showing the structure of a conventional optical module.
Fig.34 is a schematic view showing the structure of another conventional optical module.
Fig.35 is a schematic view showing a typical system configuration installed at a CO of an optical fiber network.

### DESCRIPTION OF THE PREFERED EMBODIMENT

Preferred embodiments of the present invention will now be explained with reference to the drawings.

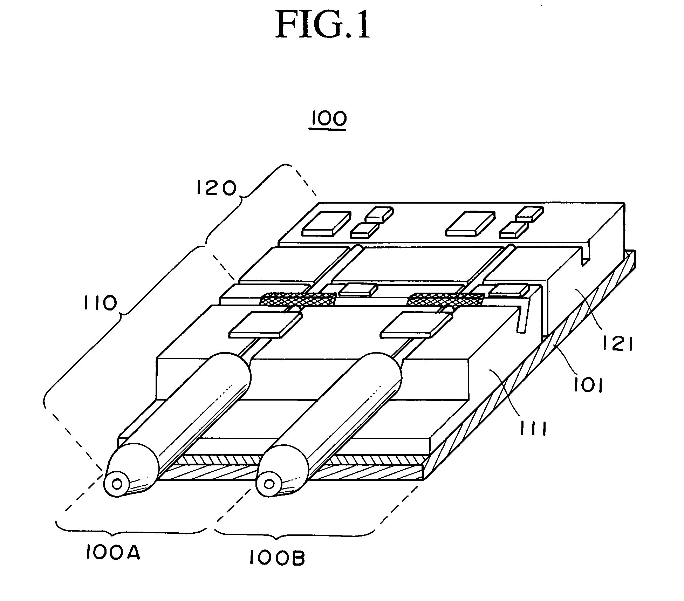

Fig.1 is a simplified perspective view schematically showing the structure of an optical module 100 according to one preferred embodiment of the present invention.
As explained later in detail, the optical module 100 of this embodiment is finally encapsulated and the main portions covered with resin. Fig.1 therefore shows the state with the resin removed from the optical module 100. Further, the transceiver ICs, leads and bonding wires are omitted in Fig. 1.

As shown in Fig. 1, the optical module 100 according to this embodiment has a PD (Photodiode) platform 110 and an LE (Light Emitter) platform 120 which are mounted on a die pad 101. The optical module 100 includes two transceiver units 100A and 100B, and each unit works as an independent element of the optical module.
The PD platform 110 and the LE platform 120 serve in common as platforms of the two transceiver units 100A and 100B. The components of the two transceivers 100A and 100B are mounted on a single PD platform and a single LE platform.

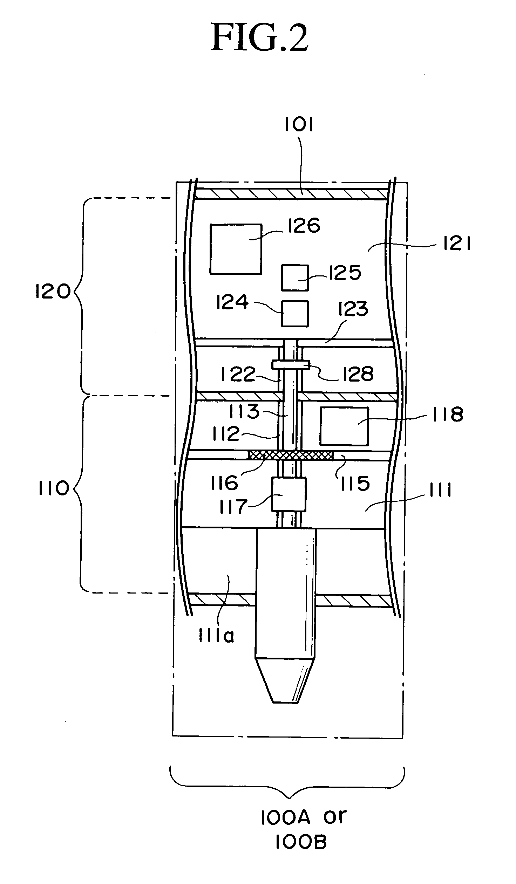

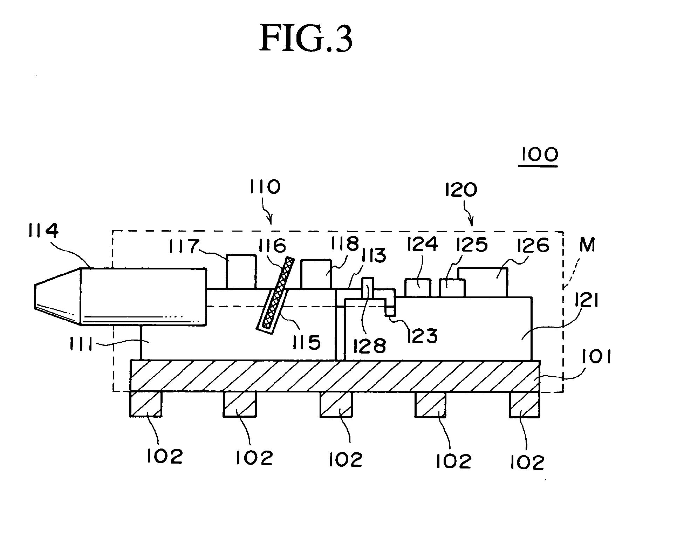

Fig.2 is a schematic partial plan view showing the structure of the transceiver units 100A and 100B of the optical module 100 illustrated in Fig. 1, and Fig.3 is a side view thereof.

As shown in Fig. 2 and Fig.3 and explained above, the transceiver units 100A and 100B comprise the die pad 101, and the PD platform 110 and LE platform 120 mounted on the die pad 101.

The die pad 101, which is formed by a cutting process or etching process, is made of metal.
The kind of the metal is not particularly limited but a metal used for a conventional lead frame, for example, an alloy including copper as the main component, an alloy including iron as the main component (such as 42-alloy (A42)) or the like, is preferably used. That is, an alloy excellent in thermal and electrical conductivity, mechanical strength and the like is preferably used.
The thickness of the die pad 101 is set to the thinnest value capable of ensuring the desired mechanical strength. It is not particularly limited but is preferably set between 0.1mm and 0.25mm.
The area of the die pad 101 is set based on the base area of the PD platform 110 and LE platform 120 mounted on the die pad 101.

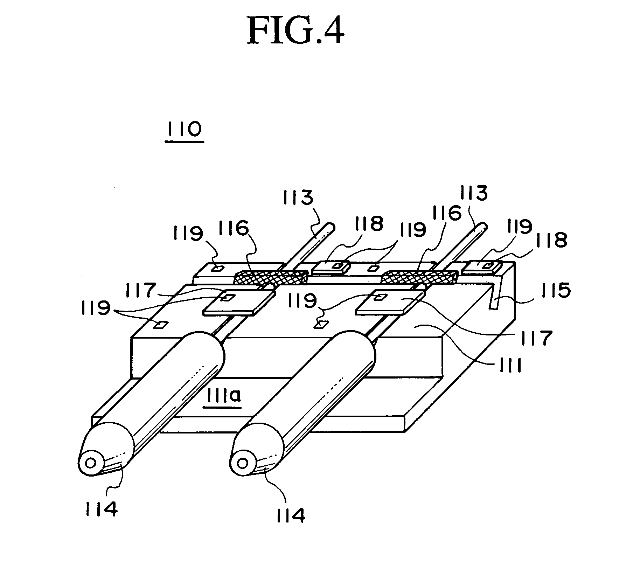

The PD platform 110 is a platform on which various parts for transforming optical signals supplied from the optical fiber into electric signals are mounted. A perspective view of the PD platform 110 is shown in Fig.4.

As shown in Figs. 2 through 4, the PD platform 110 comprises a PD platform body 111 made of silicon or the like, grooves 112 formed on the upper surface of the PD platform body 111, optical fibers 113 accommodated in the grooves 112, ferrules 114 provided at the ends of the optical fibers 113, a slit 115 formed on the upper surface of the PD platform body 111 so as to cross the grooves 112,
WDM filters 116 inserted in the slit 115, and receiving photo-diodes 117 and receiving ICs 118 mounted on the upper surface of the PD platform body 111. Further, although not illustrated, there are bonding pads on the upper surface of the PD platform body 111, on the receiving photo-diodes 117, on the receiving ICs 118 and the like.
The bonding pads are connected electrically to outer electrodes with bonding wires.

The PD platform body 111 is made of a silicon block or the like. As shown in Fig.1, the components of the two transceiver units 100A and 100B are mounted on a single PD platform body 111. A step 111a is cut at the portion on the PD platform body 111 where the ferrules 114 are mounted, and the ferrules 114 are supported by the step 111a. Such a step 111a can be formed by chemical etching or mechanical dicing. Although not illustrated, an insulation film coating, such as an oxide film or a nitride film, is also formed on the upper surface of the PD platform body 111. The pad electrodes, wiring and the like connecting with some of the bonding pads 119, the receiving photo-diodes 117 and the like are provided on the insulation film coating.

The grooves 112 are guidance grooves for holding the optical fibers 113. Their width and depth are set large enough to accommodate the optical fibers 113. They can also be formed by chemical etching or mechanical dicing. The optical fibers 113 accommodated in the grooves 112 are fixed by adhesive (not illustrated).

As known widely; an optical fiber is a fiber-shaped optical waveguide which consists of a core and a cladding surrounding the core, and light propagation can be attained by utilizing the difference of these refractive indexes. The end surface of each optical fiber 113 is made flat and smooth by polishing.

As known widely, a ferrule has cylinder shape which can hold an optical fiber. One end of each optical fiber 113 terminates inside of the associated ferrule 114. By inserting one polished end of another optical fiber into the ferrule 114, it is possible to accomplish optical coupling between the two optical fibers.

The slit 115 is formed on the upper surface of the PD platform body 111 so as to cross the grooves 112. Its width and depth are set according to the size of the WDM filters 116 inserted into it. If the width of the slit 115 is wider than necessary, diffraction loss will increase. Thus, the width of the slit 115 is set only slightly larger than the thickness of the WDM filters 116. The slit is provided at a predetermined angle so that the light propagating through each optical fiber 113 from the side of the ferrule 114 reflects at the associated WDM filter 116 and advances in a direction above the upper surface of the PD platform body 111. The angle of the slit 115 is not particularly limited but it is preferably set at an angle of about 30 degree to a plane perpendicular to the upper surface of the PD platform body 111. The slit 115 can also be formed by the chemical etching or the mechanical dicing. However, it is preferably formed by mechanical dicing because, differently from the step 111a and the groove 112, it needs to be formed at the predetermined angle while simultaneously cutting the optical fibers 113.

Each WDM filter 116 is an optical filter which transmits light of the transmission wavelength (for example, about 1.3 µm) and reflects light of the reception wavelength (for example, about 1.55 µm). Since the WDM filter 116 is inserted into the slit 115 formed at the above-mentioned predetermined angle, it reflects light of the reception wavelength propagating through the optical fiber 113 from the side of the ferrule 114 upwardly of the PD platform body 111, while it transmits light of the transmission wavelength propagating through the optical fiber 113 from the side of the LE platform 120 toward the side of the ferrule 114. In addition, the slit 115 for inserting the WDM filters 116 is filled with an optical resin (not illustrated), thus the WDM filters 116 are securely fixed by the resin in the slit 115.

Each receiving photo-diode 117 is an element that detects light of the reception wavelength reflected by the associated WDM filter 116 at its bottom surface and transforms the optical signals into electrical signals. Each receiving photo-diode 117 is mounted so as to straddle the associated groove 112 at the position where a reflective light from the WDM filter 116 can be received.

Each receiving IC 118 is a device for at least receiving and processing the output signals of the associated receiving photo-diode 117. Transfer of the data between the receiving IC 118 and the receiving photo-diode 117 is performed through the wiring pattern (not shown) formed on the upper surface of the PD platform body 111, and transfer of the data between the receiving IC 118 and a terminal device (not shown) is performed through the bonding pads or the leads (not illustrated). Moreover, if a bonding pad 119 is formed on the photo-diode 117, the transfer of some of the data or the supply of power between the receiving photo-diode 117 and the terminal device (not illustrated) can be performed directly. Although only a single receiving IC 118 is mounted on the PD platform 110 for each transceiver unit in this embodiment, the number of receiving ICs is not particularly limited and two or more ICs may be mounted per transceiver unit. Moreover, it is also possible to omit the receiving IC 118 if the signal from the receiving photo-diode 117 is processed by another IC not mounted on the PD platform 110.

The PD platform 110 is configured as explained above.

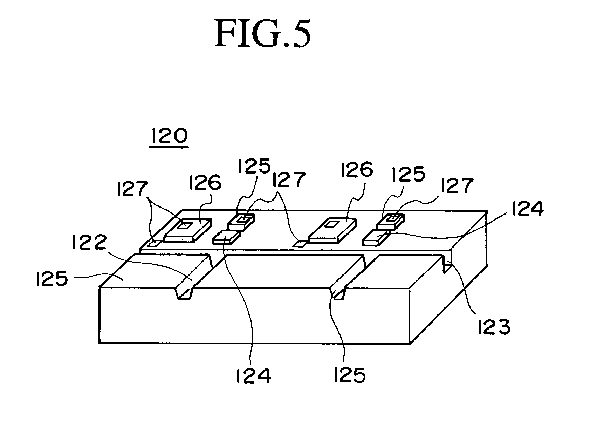

The LE platform 120 is a platform on which various components for transforming electric signals supplied from the terminal device into optical signals and transmitting them through the optical fibers 113 are mounted. A perspective view of the LE platform 120 is shown in Fig.5. Fig.5 shows the state before mounting the LE platform 120 on the die pad 101, and the optical fibers 113 and the like are not illustrated.

As shown in Figs2, 3, and 5, the LE platform 120 comprises an LE platform body 121 made of silicon or the like, V grooves 122 formed on the upper surface of the LE platform body 121, a trench 123 formed on the upper surface of the LE platform body 121 so as to cross the ends of the V groves 122, and light emitters 124, monitoring photo-diodes 125, and transmitting ICs 126 mounted on the upper surface of the LE platform body 121.

Although not illustrated, there are bonding pads on the upper surface of the LE platform body 121, on the monitoring photo-diodes 125, on the transmitting ICs 126 and the like. The bonding pads are connected electrically to outer electrodes with bonding wires.

The LE platform body 121 is made of a silicon block or the like, similarly to the PD platform body 111. As shown in Fig. 1, the components of the two transceiver units 100A and 100B are mounted in parallel on one LE platform body 121. Although not illustrated, an insulation film coating, such as an oxide film or a nitride film, is also formed on the upper surface of the LE platform body 121. Some of the bonding pads 127, the pad electrodes, or the wiring connected with some of the bonding pads, the light emitters 124 and the like are provided on the insulation film coating.

The V grooves 122 are guidance grooves for correctly aligning the optical fibers 113 mounted therealong, and their shape is defined so that the ends of the optical fibers 113 face the light projecting surfaces of the light emitters 124 correctly. The V grooves 122 can also be formed by chemical etching or mechanical dicing. Chemical etching is more preferable because it is necessary to position the optical fibers 113 correctly.

The trench 123 is provided so as to make the ends of the V grooves 122 a vertical plane. This is done because the ends may become taper-like when the V grooves 122 are formed by chemical etching and in such a case, it becomes difficult to orient the optical fibers 113 and the light projecting surfaces of the light emitters 124 in the correct opposing relationship. In order to correctly oppose the ends of the optical fibers 113 and the light projecting surfaces of the light emitter 124, the ends of the V grooves 122 need to fall in a vertical plane, and in order to realize this, the trench 123 is formed. The trench 123 can also be formed by chemical etching or mechanical dicing.

Each light emitter 124 is an element for generating the light projected into the associated optical fiber 113. It can be a laser diode (LD), a vertical cavity surface emitting laser (VCSEL) or a light emitting diode (LED). The light emitter 124 has two opposing light projecting surfaces. One light projecting surface is located on the side of the associated V groove 122, and the other light projecting surface is located on the side of the associated monitoring photo-diode 125.
Therefore, part of the light from the light emitter 124 is supplied to the optical fiber 113 installed in the V groove 122, and the remainder is supplied to the monitoring photo-diode 125.

The monitoring photo-diode 125 is used to receive the light from the other light projecting surface of light emitter 124 and to monitor its intensity. The output of the monitoring photo-diode 125 is supplied to the associated transmitting IC 126, which optimizes the luminescence intensity of light emitter 124.

The transmitting IC 126 is a device for receiving at least the signal transmitted from a terminal device and the output signal of the monitoring photo-diode 125, processing these signals, and driving the light emitter 124. Transfer of the data between the transmitting IC 126 and light emitter 124 or the transmitting IC 126 and the monitoring photo-diode 125 is performed through the wiring pattern (not shown) provided on the upper surface of LE platform body 121. Transfer of the data between the transmitting IC 126 and the terminal device (not illustrated) is performed through a bonding pad and a lead, which are not illustrated. Moreover, if bonding pads are formed on the monitoring photo-diodes 125 and the like, the transfer of some of the data between the terminal devices (not illustrated) and the monitoring photo-diodes 125 and supply of power can be performed directly. In addition, although one transmitting IC 126 is mounted on the LE platform 120 for each transceiver unit in this embodiment, the number of the transmitting ICs is not limited to one but can be two or more. Moreover, it is also possible to omit the transmitting ICs 126 when the light emitters 124 are driven by other ICs not mounted on the LE platform 120.

The optical module 100 of this embodiment is completed by mounting the PD platform 110 and the LE platform 120 of the foregoing structure in order on the die pad 101, connecting the bonding pads and the leads by the bonding wires, and encapsulating the area M in Fig. 3 with resin.

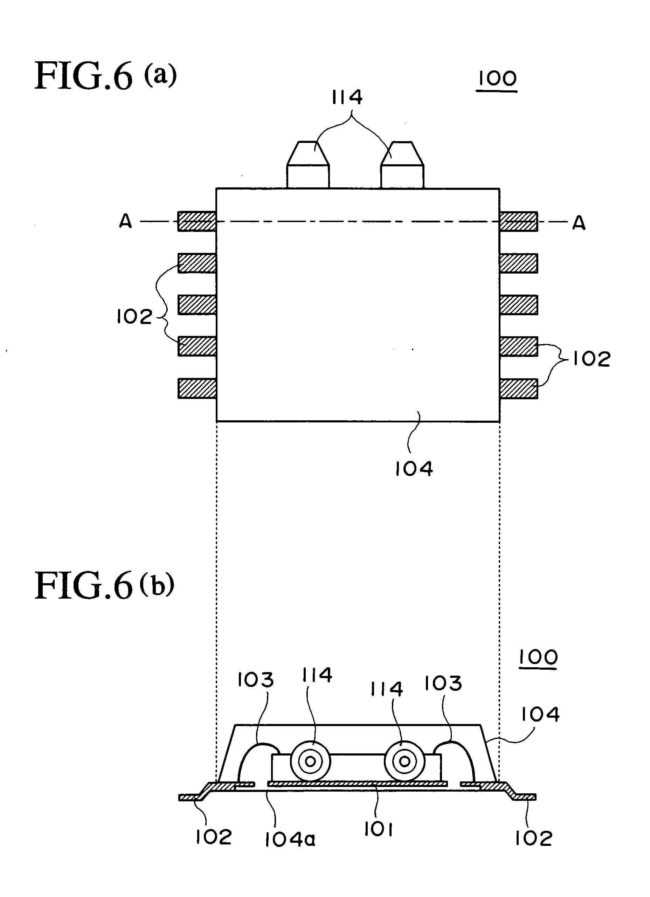

Fig.6 (a) is a schematic top view showing the exterior of the optical module 100 according to this embodiment, and Fig.6 (b) is a schematic cross sectional view taken along line A-A of Fig. 5 (a).

As shown in Fig.6 (a) and Fig.6 (b), the optical module 100 according to this embodiment comprises a package body 104 made of resin and having an approximately rectangular parallelepiped shape, multiple leads 102 drawn out from both side faces of the package body 104 and bent in the direction of mounting side 104a of the package body 104, and two ferrules 114 projecting from a side face different from the side faces the leads 102 are drawn out from. In other words, the appearance of the optical module 100 is similar to an ordinary packaged semiconductor device. For this reason, it can be mounted on a printed circuit board similarly to general semiconductor devices, making it is very easy to handle. Moreover, it is possible to provide a multi-channel optical module that has two or more transceiver units in one package. This enables reduction of the overall size of ONUs and other units including many optical modules, improvement of mounting efficiency, and low cost.

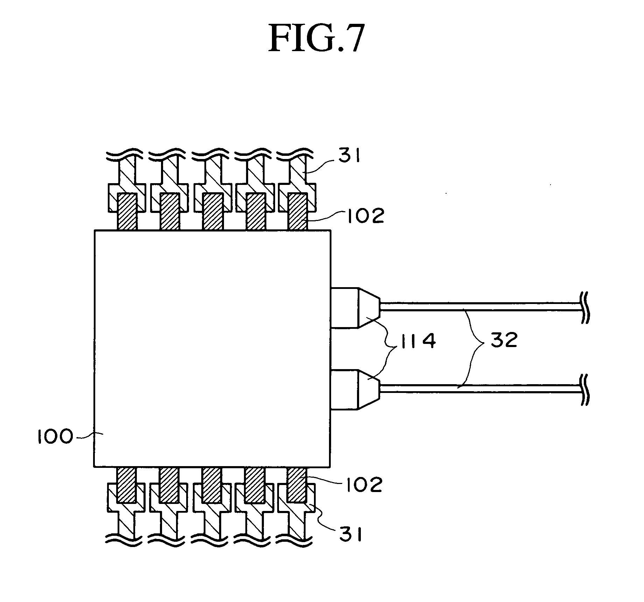

Fig.7 is a schematic top view showing the optical module 100 mounted on a printed circuit board or the like. As shown in Fig. 7, when an optical module 100 according to this embodiment is mounted on a printed circuit board or the like, an electrode pattern 31 provided on the surface of the printed circuit board and the leads 102 of the optical module 100 are connected electrically and mechanically with solder or the like, and other optical fibers 32 are fixed by insertion into the ferrules 114. Thus, the optical module 100 can communicate electrically with a specified terminal device through the electrode pattern 31 and communicate optically with another terminal through the optical fibers 32.

Next, a method of fabricating the optical module 100 according to this embodiment will be explained in detail.

The method of fabricating the PD platform 110 will be explained first. In fabricating the PD platform 110, a block member of silicon or the like to serve as the PD platform body 111 is first prepared, an insulation film coating, such as an oxide film or a nitride film, is formed on the surface of the block member, electrodes such as the bonding pads 119 and wiring patterns are formed on the insulation film coating, a step 111a is formed on the PD platform body 111 by chemical etching or mechanical dicing, and two grooves 112 are formed at a predetermined interval.
The two grooves 112 correspond to the two transceiver units 100A and 100B. Also when the optical module 100 has more than two transceiver units, the grooves 112 are formed in the same number as the number of transceiver units. Alternatively, the step 111a and the grooves 112 may be formed before forming the insulation film coating, electrodes and the like. Furthermore, the electrodes may be formed after forming the step 111a, the grooves 112 and the insulation film coating.

On the other hand, two optical fibers 113 polished at both ends are prepared and one end of each is inserted into and fixed in one of the two ferrules 114. The optical fibers 113 having the ferrules 114 at their one ends are accommodated in the grooves 112 and fixed in the grooves 112 with adhesive. At this time, as shown in Fig.3, the optical fibers 113 need to project only a predetermined length from the PD platform body 111. As mentioned above, two optical fibers 113 are prepared by attaching the ferrules 114 to their one ends and are then accommodated one in each of the grooves 114, whereafter the optical fibers 113 are fixed with adhesive. At this time, as shown in Fig.3, it is necessary for the optical fibers 113 to extend a predetermined length from the edge of the PD platform body.

Next, the slit 115 is formed by chemical etching or mechanical dicing, preferably by mechanical dicing, and the WDM filters 116 are inserted into the slit, which is formed to cut across the grooves 112. And the excess space of the slit 115 is filled with optical resin, thereby fixing the WDM filters 116 in the slit 115.

Next, two photo-diodes 117 for transmission and two ICs for transmission 118 are mounted on the electrode pattern formed on the PD platform body so that one of each is associated with each of the transceiver units 100A and 100B. The PD platform 110 is completed by mounting the receiving photo-diodes 117 and receiving ICs 118 on the electrode pattern provided on the PD platform body 111.

Next, a method of fabricating the LE platform 120 will be explained. In fabricating the LE platform 120, a block member of silicon or the like to serve as the LE platform body 121 is prepared in a manner similar to the fabrication of the PD platform 110. An insulation film coating, such as an oxide film or a nitride film, is formed on the surface of the block member, and two V grooves 122 are formed at a predetermined interval on the LE platform body by chemical etching or mechanical dicing, preferably chemical etching. The two grooves 112 correspond to the two transceiver units 100A and 100B. A trench 123 is formed on the LE platform body 121 by chemical etching or mechanical dicing, preferably mechanical dicing. The V grooves 122 and the trench 123 may be formed before forming the insulation film coating, electrode and the like. Furthermore, the electrodes may be formed after forming the V grooves 122 and trench 123, the insulation film coating. However, it is necessary to form the trench 123 after forming at least the V grooves 122.

Next, the two light-emitters 124, two monitoring photo-diodes 125 and two ICs for transmission 126 are mounted on the electrode pattern formed on the LE platform body so that one of each is associated with each of the transceiver units 100A and 100B. This completes the LE platform 110.

Next, a method of mounting the PD platform 110 and the LE platform 120 on the die pad 101 will be explained.

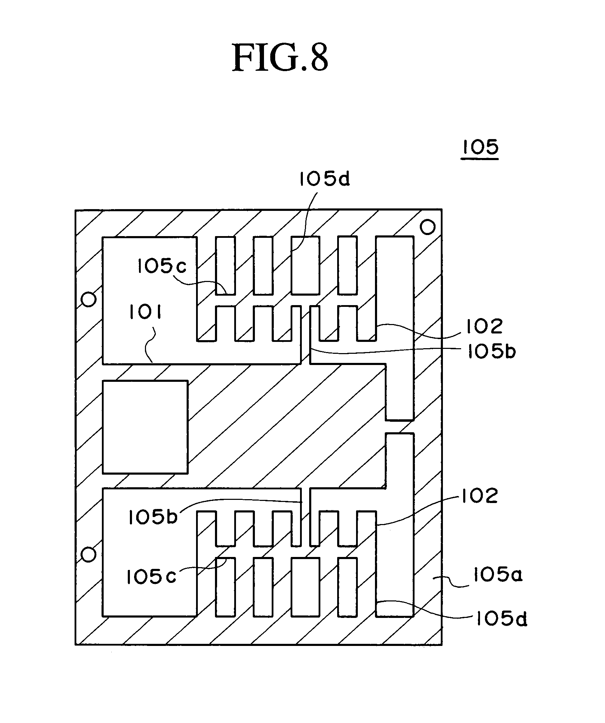

First, as shown in Fig.8, a lead frame 105 including the die pad 101 and the leads 102 is fabricated. Such a lead frame 105 can be produced by punch machining or etching of a metal plate.

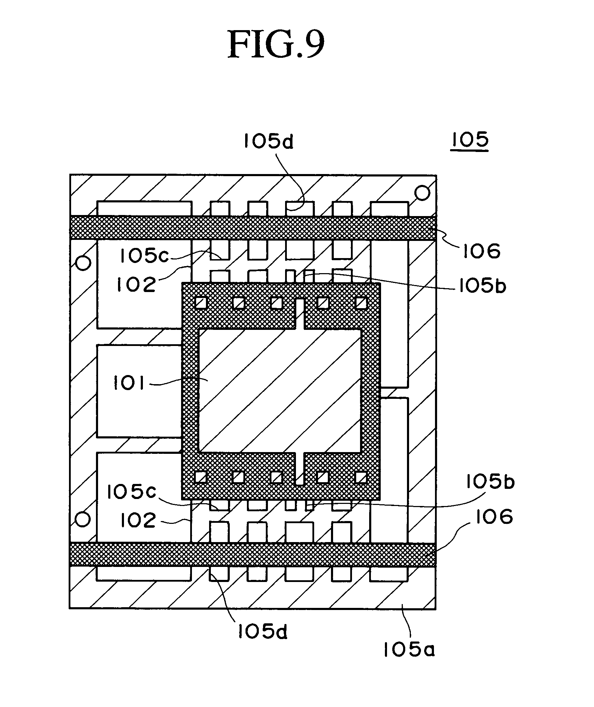

Next, as shown in Fig.9, the die pad 101 and one tip portion of leads 102 are connected with resin 106, such as PPS (polyphenylene sulfide), and further, each lead 102 and an outer frame 105a of the lead frame 105 are connected (pre-molding).

After such pre-molding, the portions 105b connecting the die pad 101 and leads 102, the portions 105c interconnecting the leads 102, and the portions 105d connecting the leads 102 and the outer frame 105a of the lead frame 105 are cut. Thereby the die pad 101, the leads 102 and the outer frame of the lead frame 105 are electrically separated from one another. In this state, since the die pad 101 and leads 102, and further the leads 102 and the outer lead 105a of the lead frame 105, are connected, they are kept in an integrated state.

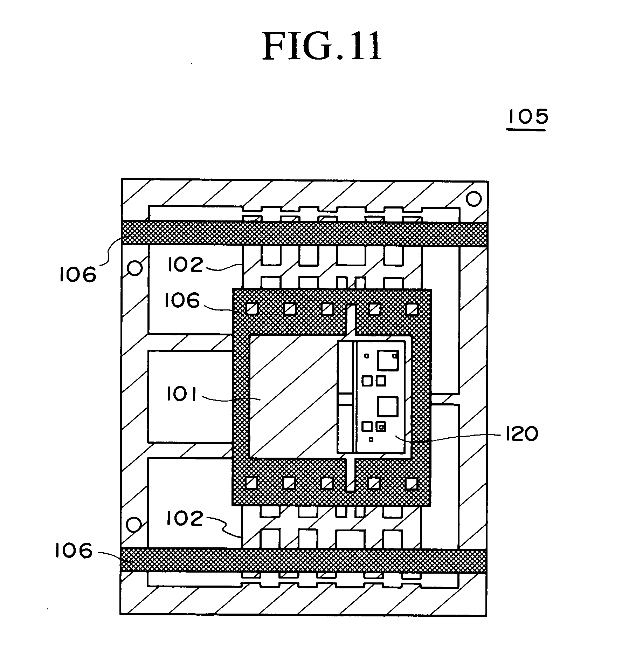

Next, as shown in Fig.11, the LE platform 120 is mounted on a predetermined portion of the die pad 101, and the bonding pads 127 and the predetermined leads 102 are connected electrically by the bonding wires 103.

Next, in this state, an electric signal is transmitted to the LE platform 120 through the leads 102 connected to the bonding wires 103, and a screening test is performed. The screening test is a test for discovering initial failure of the light emitter 124 by maintaining application of a few hundred mA of driving current to the emitters 124 for a few hours. By monitoring the intensity of the signal detected with the monitoring photo-diodes, it is possible to discover any initial failure of the light emitters 124. Subsequent fabricating processes are performed only on products in process that pass the screening test, and no subsequent process is performed on products in process in which initial failure of the light emitter 124 was discovered in the screening test. It is therefore possible to eliminate pointless processing.

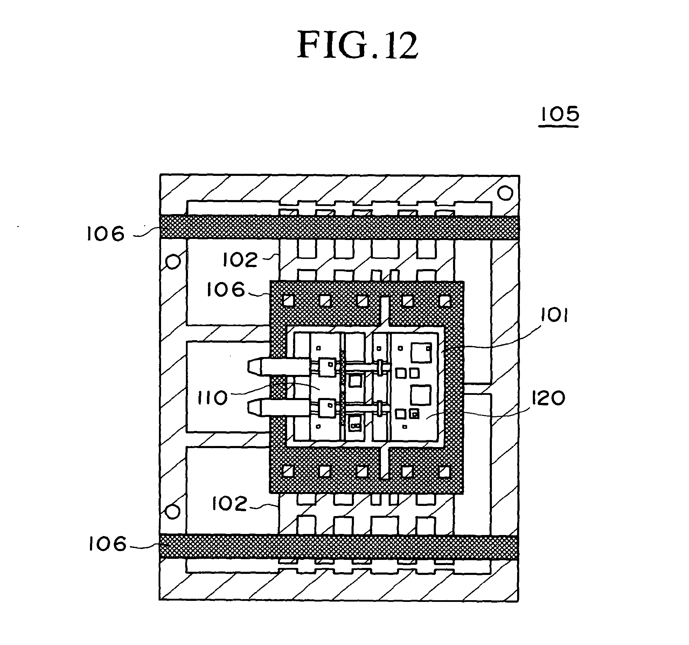

When the screening test is passed, the PD platform 110 is mounted on a predetermined area of the die pad 101 as shown in Fig.12,, and the two optical fibers 113 are arranged along the corresponding V grooves 122, by which the ends of the optical fibers 113 are made to face to the light emitting surfaces of the light emitters 124 correctly. Next, adhesive 128 (see Fig.1 and 2) is applied to the optical fibers 113 installed in the V grooves 122 and hardened, by which the optical fibers 113 are fixed in the V grooves 122. The material of the adhesive 128 is not particularly limited but a thermosetting resin or ultraviolet-light curable resin can be used. Moreover, the optical fibers 113 may be fixed by lids, such as of silicon or quartz, instead of the adhesive 128.

Next, bonding pads on each platform and predetermined leads 102 are connected electrically with bonding wires 103, after which silicone gel is applied onto all optical functional elements, such as the photo-diodes for reception 117, light emitters 124 and the like. Such silicone gel mainly serves to ensure propagation of the light signals between the light emitter 124 and optical fiber 113 and as a buffer for protecting the optical functional elements, such as the light emitters 124 and the like, from mechanical stress from outside. The mechanical stress is absorbed by the silicone gel.

Further, the area M shown in Fig.1 and 2 is molded with resin and the leads 102 are cut, by which the optical module 100 is completed.

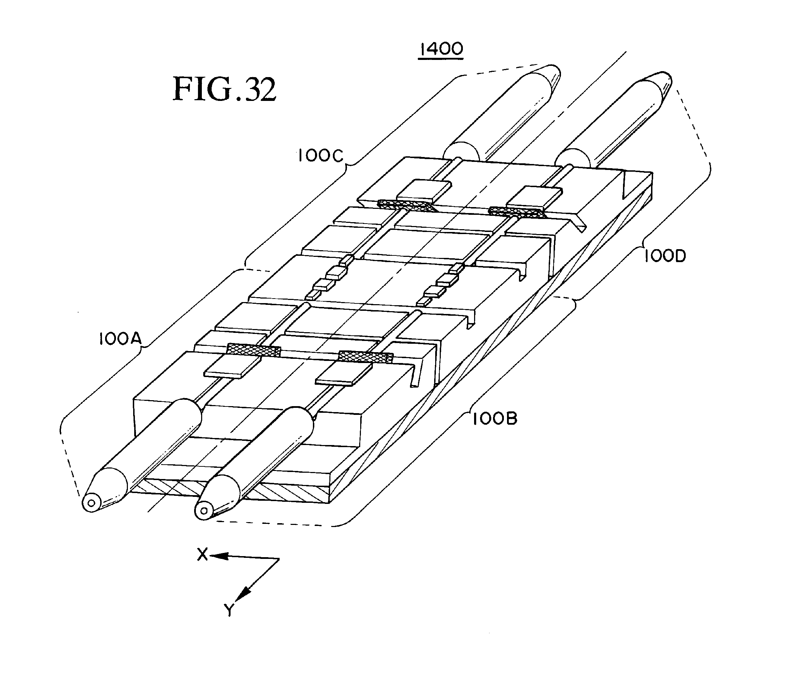

As described above, since the PD platform 110 and the LE platform 120 are mounted on a single die pad 101 and these are encapsulated integrally by resin, the optical module 100 of this embodiment can be handled very easily. Further, differently from the conventional optical module, the optical module 100 does not require fine tuning by a skilled worker and is therefore high in fabricating efficiency. It is therefore possible to realize relatively low cost as compared with the optical module 20 including the conventional optical waveguide shown in Fig.32.

Especially noteworthy is that since the optical module 100 of this embodiment comprises two transceiver units 100A and 100B and these are mounted on a common PD platform 110 and common LE platform 120, it is possible to realize miniaturization, low cost and improvement of mounting efficiency.

Further, if the LE platform 120 is first mounted on the die pad 101 and the PD platform 110 is then mounted, the parts on the PD platform 110 will not be affected by the heat imparted when mounting the light emitters 124 and the like on the LE platform body 121. Accordingly, it becomes easy to control temperature at each process in the fabrication.

Furthermore, in the fabrication of the optical module 100 of this embodiment, the PD platform 110 is mounted after mounting the LE platform 120 on the die pad 101 and a screening test is then carried out. As a result, it is not necessary to perform needless processing on a product in process that has an initial failure, and is therefore possible to reduce manufacturing cost.

Although the WDM filters 116 and receiving photo-diodes 117 mounted on the PD platform body 111, and the light emitter 124 and photo-diodes 125 mounted on the LE platform body 121, are provided separately for each transceiver unit 100A and 100B, common parts, such as an arrayed device, may be used.
Next, an embodiment in which arrayed elements are mounted on the platform will be explained.

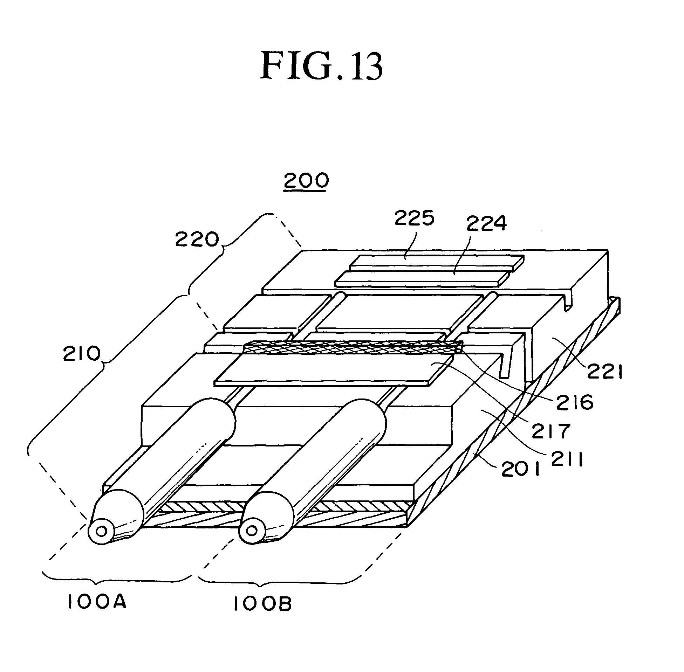

Fig. 13 is a perspective view schematically showing the structure of an optical module 200 according to another preferred embodiment of the present invention. The optical module 200 of this embodiment is finally encapsulated and main portions are covered with resin. Fig.13 therefore shows the state where the resin is removed from the optical module 200. Further, the transceiver ICs, leads and bonding wires are also omitted from Fig.13.

As shown in Fig.13, the optical module 200 according to this embodiment has a PD platform 210 and an LE platform 220 which are mounted on a die pad 201, similarly to the optical module 100 according to the above embodiment. However, it is different from the optical module 100 according to the above embodiment in the point that the WDM filters and the monitoring photo-diodes are replaced by a single WDM filter 216 and a single photo-diode array 217, which are used in common by the transceiver units 100A and 100B. The light emitters and the monitoring photo-diodes mounted on the LE platform body 221are replaced by a light emitter array 224 and a photo-diode array 225 which are common to the transceiver unit 100A and 100B. In other aspects of the configuration is the same as that of the optical module 100. Although the WDM filter and arrayed device are single units, it is possible to perform filtering and light emitting/receiving at the predetermined position of each transceiver unit 100A and 100B

The optical module 200 according to this embodiment offers the same advantages as the optical module 100 according to the above embodiment. Further, since the WDM filter consists of only one filter element, and the light emitting/receiving elements, such as the photo-diodes and light emitters, are constituted as arrayed devices used in common by the transceiver units, it becomes easy to mount the elements, as compared with the case where the elements are individually mounted onto the platform body. Further, since an arrayed element is only slightly more expensive than a single element that is not arrayed, it is possible to reduce the cost of the optical module product itself and the manufacturing cost.

In the above optical module 100, the receiving ICs 118 mounted on the PD platform body and the transmitting ICs 126 mounted on the LE platform body are provided separately for each transceiver unit 100A and 100B. However, these ICs may be used in common in the present invention. Next, an embodiment in which the receiving IC and the transmitting IC are used in common will be explained.

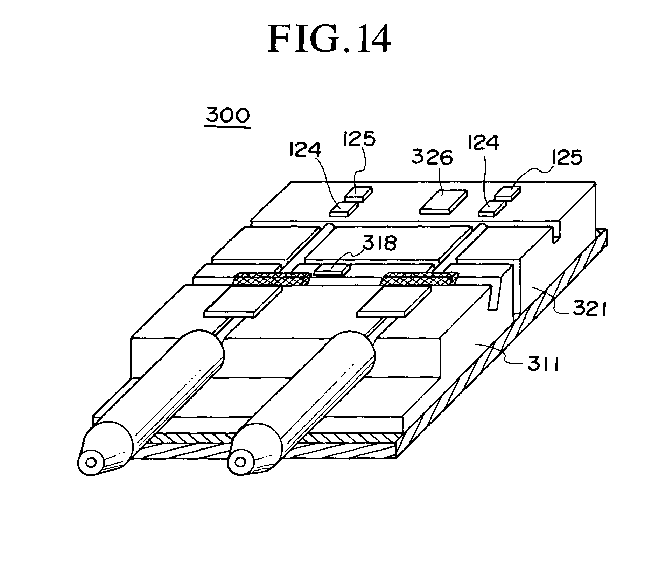

Fig. 14 is a plan view schematically showing the structure of an optical module 300 according to another preferred embodiment of the present invention. The optical module 300 of this embodiment is finally encapsulated and main portions are covered with a resin. Fig.14 therefore shows the state where the resin is removed from the optical module 300. Further, the transceiver ICs, leads and bonding wire are also omitted from Fig.14.

As shown in Fig.14, the optical module 300 according to this embodiment has a PD platform 311 and an LE platform 321 which are mounted on a die pad 301, similarly to in the optical module 100 according to the earlier embodiment. However, it is different from the optical module 100 according to the above embodiment in the point that the receiving ICs mounted on the PD platform body are replaced by a single IC 318 that is used in common by the transceiver units 100A and 100B. Further, the transmitting ICs mounted on the LE platform body are also replaced by a single IC 326 that is also used in common by the transceiver units 100A and 100B. In other aspects the configuration is the same as that of the optical module 100. Although the receiving IC 318 and the transmitting IC 326 are just one IC, it is possible to perform independent control and processing to each transceiver unit 100A and 100B, respectively.

The optical module 300 according to this embodiment offers the same advantages as the optical module 100 according to the above embodiment. Further, since the receiving circuit and transmitting circuit utilized by the transceiver units 100A and 100B consist of one IC, respectively, mounting is facilitated and the platform body can be miniaturized. Thus, it is possible to reduce the manufacturing cost as well as the cost of materials, because a large number of platform bodies can be produced at one time by cutting a silicon wafer into many pieces.

In addition, in the optical module 300 according to the present invention, although the receiving IC and the transmitting IC are integrated separately, these may be integrated as a single IC for the transceiver. Moreover, it is possible to integrate only the receiving IC or only the transmitting IC.

Moreover, in the above optical module 100, although the receiving ICs 118 are mounted on the PD platform body 111 and the transmitting ICs 126 are mounted on the LE platform body, these IC may all be mounted on the die pad 101 in the present invention.
Next, an embodiment in which the receiving ICs and transmitting ICs are mounted on the die pad will be explained.

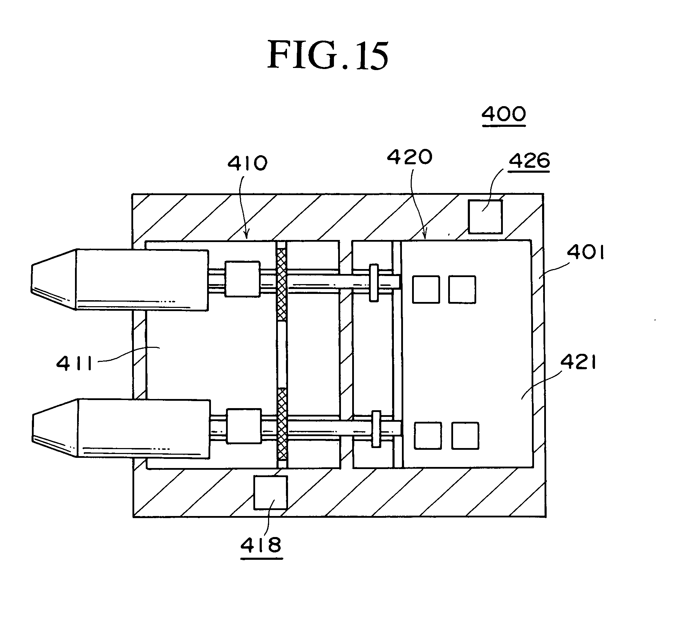

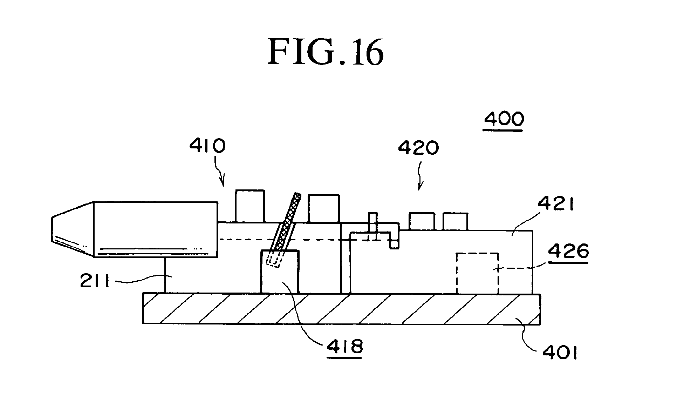

Fig.15 is a plan view schematically showing the structure of an optical module 400 according to another preferred embodiment of the present invention. Fig.16 is the side view schematically showing the structure of the optical module 400. The optical module 400 of this embodiment is finally encapsulated and main portions are covered with resin. Fig. 15 therefore shows the state where the resin is removed from the optical module 400. Further, transceiver ICs, leads and bonding wires are also omitted from Fig.15.

As shown in Fig. 15 and 16, the optical module 400 according to this embodiment has a PD platform 410 and an LE platform 420 which are mounted on a die pad 401 and, similarly to in the optical module according to the above embodiment, a receiving IC 418 and transmitting IC 426 are used in common by the transceiver units 400A and 400B. However, the optical module 400 is different from the optical module 300 according to the above embodiment in the point that the receiving IC 418A and the transmitting IC 400B are mounted on the die pad 401. In other aspects the configuration is as same as that of the optical module 300.

The optical module 400 according to this embodiment offers the same advantages as the optical module 300 according to the above embodiment. Further, since the receiving IC 418A and the transmitting IC 400B are not mounted on the PD platform body 411 and the LE platform body 421 but are mounted on the die pad 401, it is possible to miniaturize the platform bodies 411 and 421. Thus, it is possible to reduce the manufacturing cost as well as the cost of materials because a large number of platform bodies can be produced at one time by cutting a silicon wafer into many pieces.

In addition, in the optical module 400 according to the present invention, although two ICs are mounted on the die pad 401, the number of ICs mounted on the die pad may be only one or three or more. Further, a predetermined IC may be mounted on the die pad 401 and the other ICs may be mounted on the PD platform body and the LE platform body.

Next, an embodiment in which the PD platform is mounted on the LE platform will be explained.

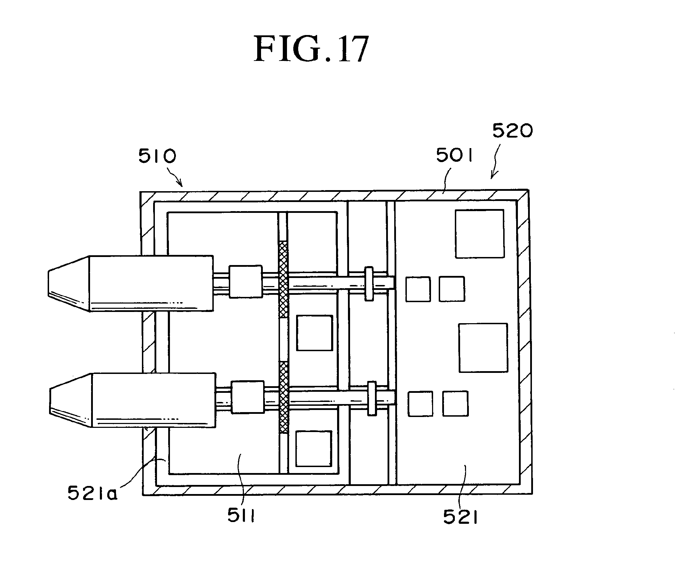

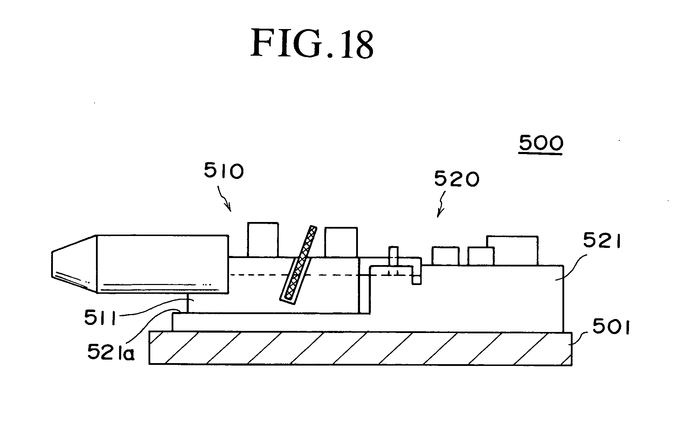

Fig. 17 is a plan view schematically showing the structure of an optical module 500 according to another preferred embodiment of the present invention. Fig.18 is a side view schematically showing the structure of the optical module 500. The optical module 500 of this embodiment is finally encapsulated and main portions are covered with resin. Fig. 17 therefore shows the state where the resin is removed from the optical module 300. Further, the transceiver ICs, leads and bonding wires are also omitted from Fig. 17.

As shown in Figs. 17 and 18, the optical module 500 according to this embodiment has a PD platform 510 and an LE platform 520, similarly to in the optical module 100 according to the above embodiment. However, it is different from the optical module 100 and the like according to the above embodiments in the point that the PD platform 510 is not mounted on the die pad 501 but on a mounting region 521a provided on the LE platform body 520. In other aspects the configuration is as same as that of the optical module 100.

The optical module 500 according to this embodiment offers the same advantages as the optical module 100 according to the above embodiment. Further, since the PD platform 510 and the LE platform 520 are substantially integrated, there is an advantage that the positional relationship between the light emitter 124 and the optical fiber 113 cannot change easily even if the shape of the die pad changes slightly owing to heat stress.

Although the PD platform and LE platform are independent components in the above optical modules 100 through 500, they may be constituted as a single platform. Next, an embodiment in which arrayed elements are mounted on a single platform will be explained.

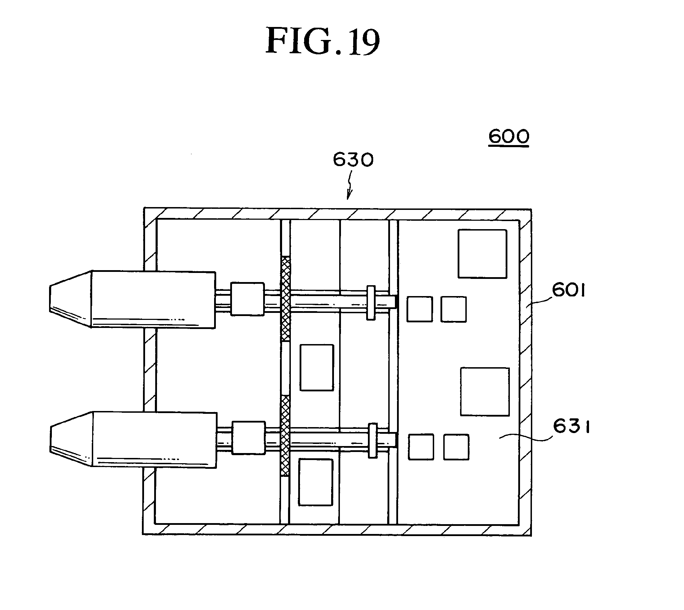

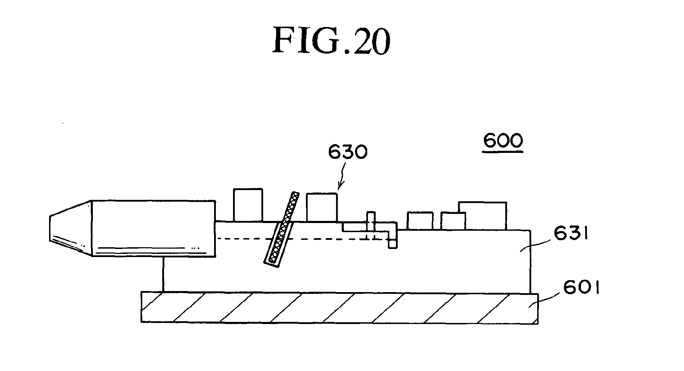

Fig.19 is a plan view schematically showing the structure of an optical module 600 according to another preferred embodiment of the present invention. Fig.20 is a side view schematically showing the structure of the optical module 600. The optical module 600 of this embodiment is finally encapsulated and main portions are covered with resin. Figs. 19 and 20 therefore show the state where the resin is removed from the optical module 600. Further, the transceiver ICs, leads and bonding wires are also omitted from Figs. 19 and 20.

As shown in Fig.19 and 20, the optical module 600 according to this embodiment has a common platform 630 mounted on a die pad 601, differently from the optical module 100 and the like according to the above embodiments. The common platform 630 consists of a unitary platform 631 and serves as both the PD platform 110 and the LE platform 120. Although the optical module 600 does not allow a screening test to be conducted only with respect to the LE platform, it otherwise offers the same advantages as the optical module 100 according to the above embodiment. Further, it is the optical module with the easiest fabricating process and, as such, enables a reduction of manufacturing cost.

Furthermore, the package of the optical module in the present invention is not particularly limited to the package shown in Fig.6 and some other package may be adopted. Next, an embodiment in which another package is adopted will be explained.

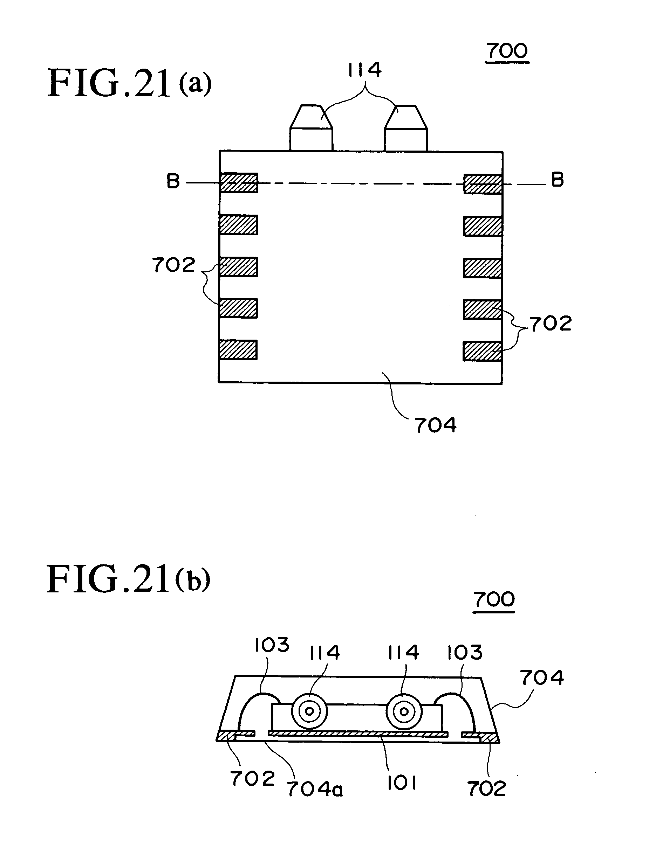

Fig.21 (a) is a schematic bottom view showing the exterior of an optical module 700 according to this embodiment, and Fig.21 (b) is a schematic cross sectional view taken along line B-B of Fig.21 (a).

As shown in Fig.21 (a) and Fig.21 (b), like the optical module 100, the optical module 700 according to the present embodiment comprises a package body 704 made of resin and having an approximately rectangular parallelepiped shape. However, its leads 702 do not project but terminate at a mounting surface of the package body 704. According to this embodiment, since the mounting area of the optical module 700 on a printed circuit board or the like is smaller than that of the optical module 100, it is possible to produce a much smaller end product.

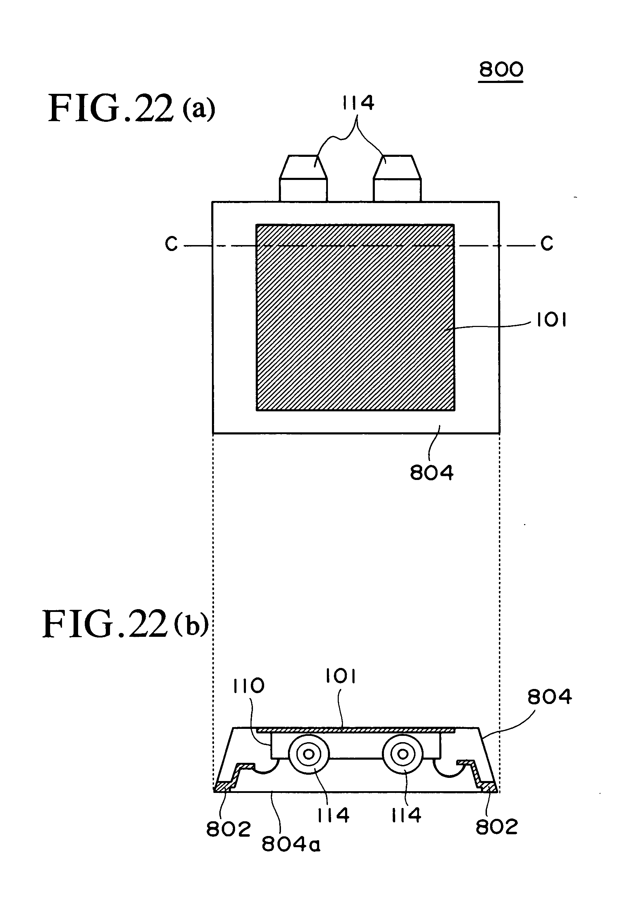

Fig.22 (a) is a schematic bottom view showing the exterior of an optical module 800 according to another embodiment of the invention, and Fig.22 (b) is a schematic cross sectional view taken along line C-C of Fig.22 (a). The optical module 800 according to this embodiment has the same configuration as the optical module 100 according to the above embodiment except for the different shape of its package. Specifically, it is configured with the PD platform 110 and the LE platform 120 mounted on the die pad 101.

As shown in Fig.22 (a) and Fig.22 (b), like the optical model 700, the optical module 800 according to the present embodiment comprises a package body 704 made of resin and having an approximately rectangular parallelepiped shape and leads 802 which terminate at its mounting surface 804a. The upper surface of the package body 804, i.e., the bottom face of the die pad 101, is exposed at the surface on the opposite side from the mounting surface 804a of the package body 804. That is, in this embodiment, a portion including the die pad 101, the PD platform 110 and the LE platform 120 is oriented upside down relative to the same portion of the optical module 700 and is encapsulated so that the bottom face of the die pad 101 is exposed at the upper surface of the package body 804.

According to this embodiment, it is possible not only to reduce the mounting area on a printed circuit board to smaller than that of the optical module 100, but also to obtain a very high heat radiating property because the die pad 101 exposed at the upper surface of the package body 804 serves as a heat sink. It is therefore possible to realize miniaturization of the end product and improved reliability.
In this embodiment, although the bottom surface of the die pad 101 is directly exposed, a heat sink can be separately provided on the bottom surface of the die pad 101 and heat radiation be conducted through the exposed heat sink.

Next, an optical connector incorporating an optical module according to the present invention will be explained.

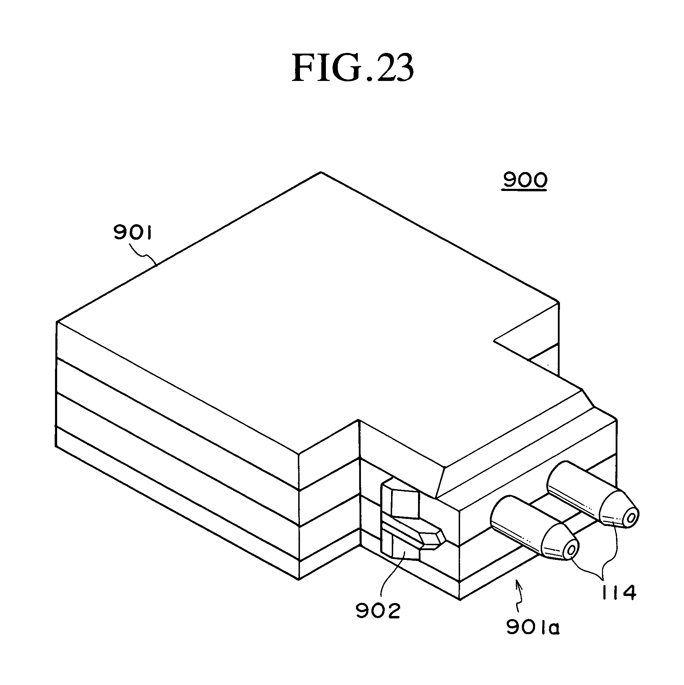

Fig.23 is an external view showing a preferred embodiment of the optical connector 900 incorporating an optical module according to the present invention. As shown in Fig.23, the optical connector 900 comprises an optical module (hidden from view) and a case 901 accommodating the optical module, and the case 901 has a connecting portion 901a of narrow width. The ferrules 114 project from at the connecting portion 901 a. Further, locking portions 902 are formed on both side surfaces of the connecting portion 901a. It is therefore possible to couple the optical connector optically and mechanically by inserting the connecting portion 901a of the optical connector 900 shown in Fig.23 into the mating connecting portion of another optical connector (not shown) and fixing the two connectors with the locking portions 902.

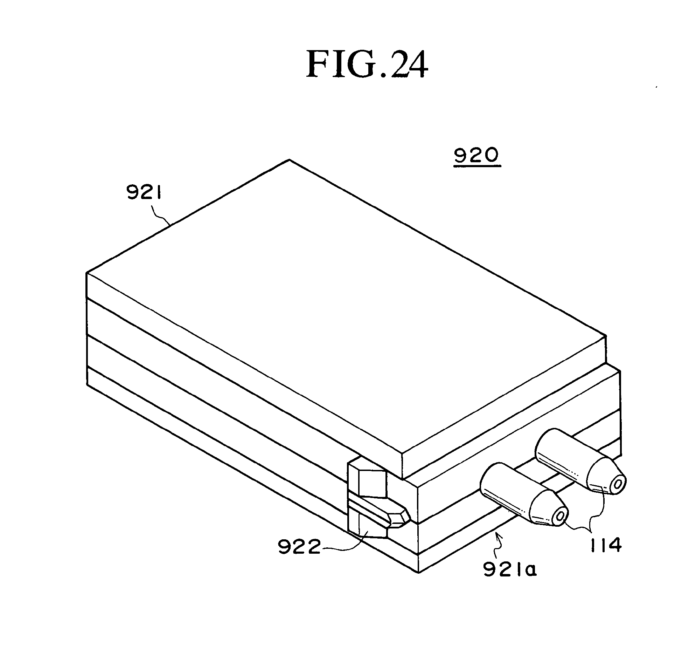

Fig.24 is an external view showing another preferred embodiment of an optical connector incorporating an optical module according to the present invention. As shown in Fig.24, the optical connector 920 is different from the optical connector 900 shown in Fig.20 in that its case 921 has no portion of narrow width and the part from which the ferrule 114 projects itself comprises a connecting portion 921a. It is therefore possible to couple two optical connectors optically and mechanically by inserting the connecting portion 921a of the optical connector 900 shown in Fig. 24 into a mating connecting portion of another optical connector (not shown) and fixing the connectors with the locking portions 922.

In the present invention, the member on which the PD platform and the LE platform are mounted is not limited to the die pad of the lead frame insofar as it is possible to support the PD platform and the LE platform mechanically and to achieve the desired heat radiating property.

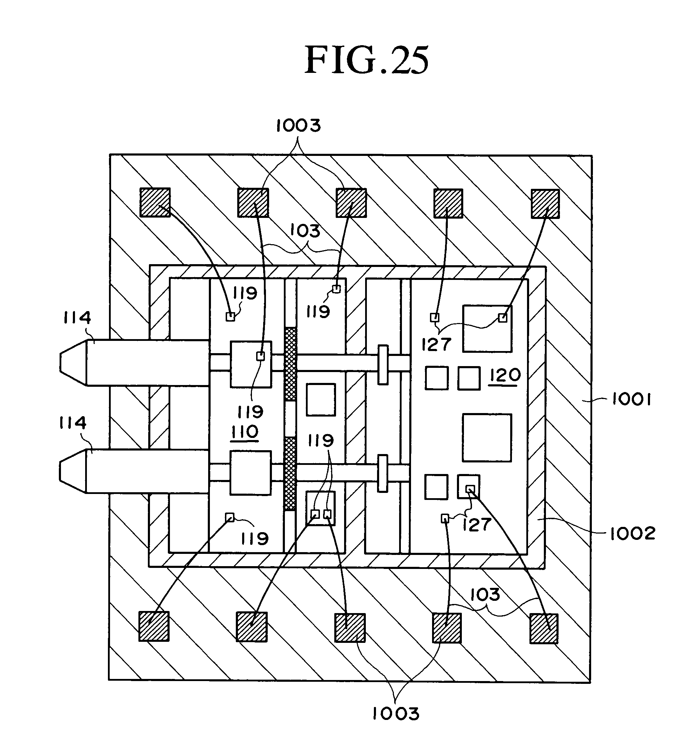

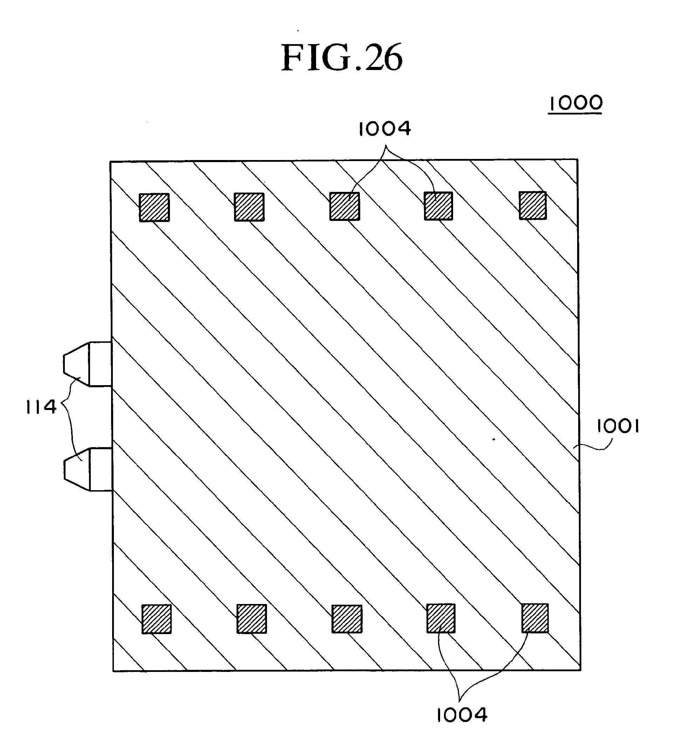

Fig.25 is a top plan view showing an optical module 1000 according to an embodiment in which the PD platform and the LE platform are mounted on a printed circuit board, and Fig.26 is a bottom view thereof. The optical module 1000 of this embodiment is finally encapsulated and main portions are be covered by resin. Figs. 25 and 26 therefore show the optical module 1000 in the state with the resin removed.

As shown in Fig.25, the optical module 1000 according to this embodiment has a PD platform 110 and an LE platform 120 mounted on a die pad 1002 formed on a printed circuit board 1001. Bonding pads 119 and 127 are connected to bonding pads 1003 formed on the printed circuit board 1001 through bonding wires 103. The material of the printed circuit board 1001 is not particularly limited but it is preferably resin or ceramic. The die pad 1002 and the bonding pads 1003 can be formed by metalizing the surface of the printed circuit board 1001.

As shown in Fig. 26, external electrodes 1004 connected to corresponding ones of the bonding pads 1003 are formed on the bottom surface of the printed circuit 1001. When the optical module 100 is mounted on another printed circuit board, electrical connection is established through the external electrodes 1004. The bonding pads 1003 and the outer electrodes 1004 are connected through internal wiring (hidden from view). The external electrodes 1004 can be formed by metalizing the bottom surface of the printed circuit.

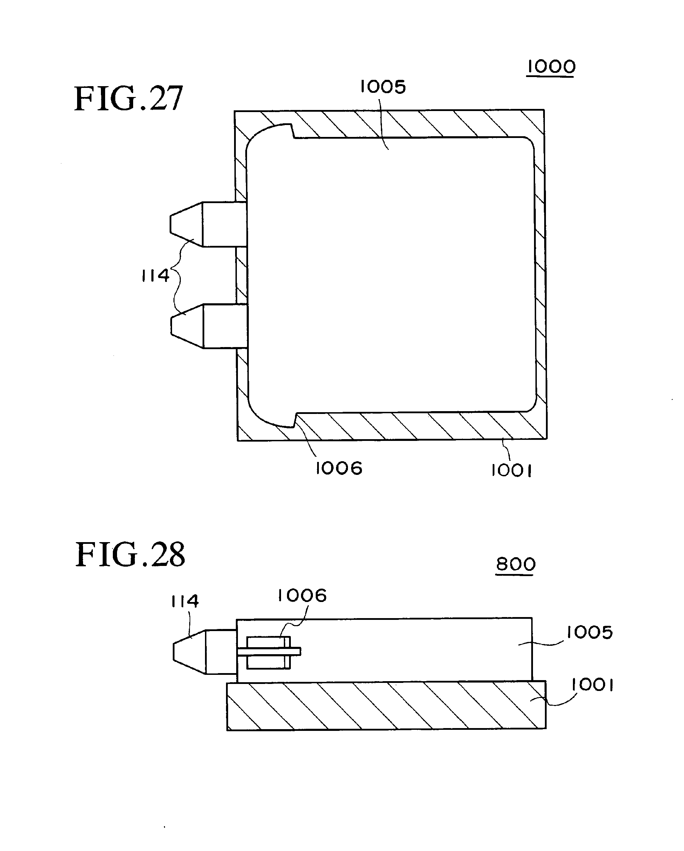

Fig.27 is a top plan view showing the resin encapsulated optical module according to this embodiment, and Fig.28 is a side view thereof.

As shown in Figs. 27 and 28, locking portions 1006 are preferably formed on both side surfaces of the resin 1005. It is therefore possible to couple two optical connectors optically and mechanically by inserting the optical connector 1000 according to this embodiment into the mating connecting portion of another optical connector (not shown) and fixing the two connectors with the locking portions 1006. Thus, the optical module 1000 can be used as an attachable optical connector by forming the locking portions 1006 on both side surfaces of the resin 1005.

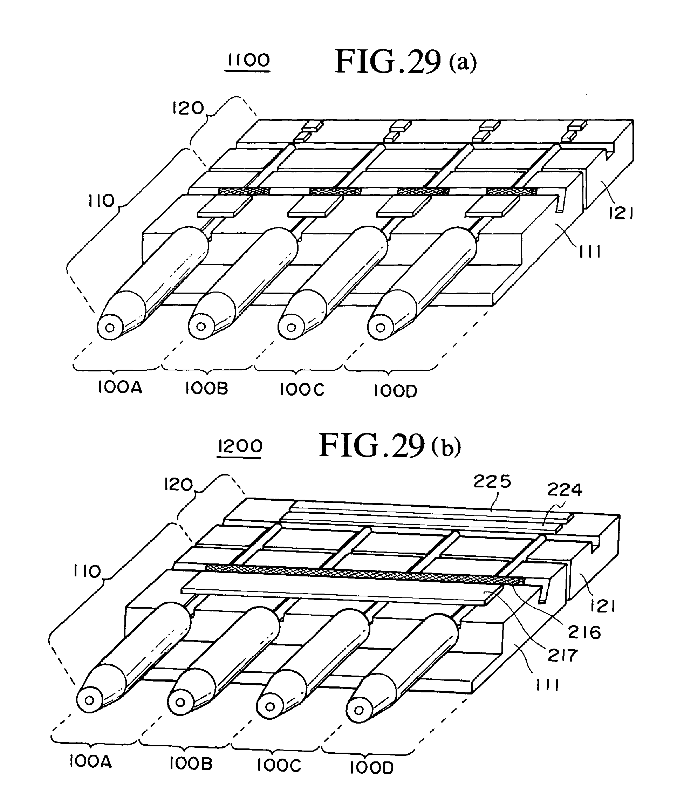

Furthermore, although two transceiver units are provided on the common platforms in the above optical modules 100 through 1000, the number of the transceiver units is not limited. For example, as shown in Fig.29 (a) and Fig.29 (b), four transceiver units 100A-100D may be arranged in parallel and oriented in the same direction. In this case, as shown in Fig.29 (a), WDM filters, photo-diodes and light emitters can be installed separately for each unit. Alternatively, as shown in Fig.29 (b), these components can be constituted as common elements.

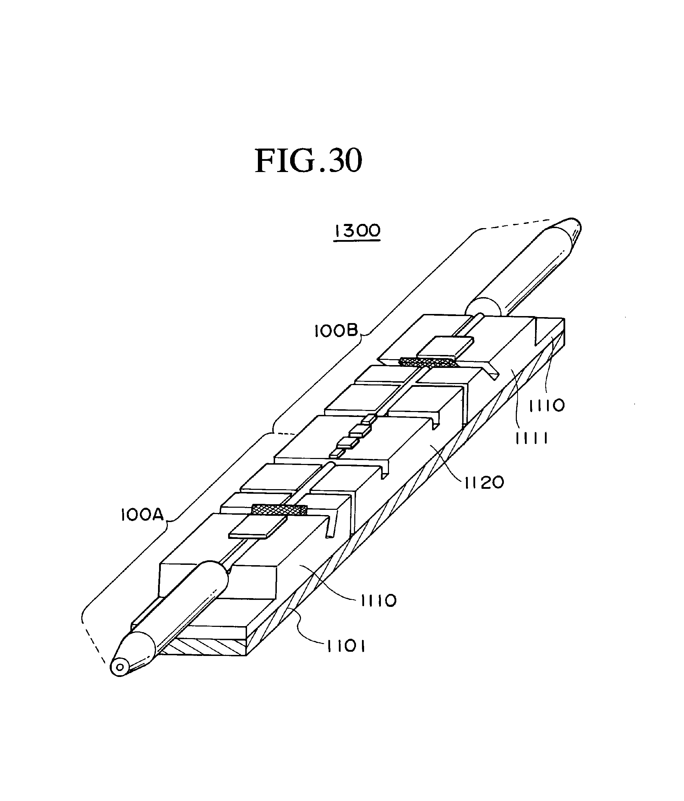

Fig.30 is a perspective view schematically showing the structure of an optical module 1300 according to another preferred embodiment of the present invention. The optical module 1300 of this embodiment is finally encapsulated and main portions are covered with resin. The optical module 1300 is therefore shown in the state with the resin removed in Fig.30. Further, the transceiver ICs, leads and bonding wires are also omitted in Fig. 30.

As shown in Fig. 30, the optical module 1300 of this embodiment has two transceivers 100A and 100B. These are not arranged laterally but so that their LE platforms face each other and their ferrules point outward. In other words, they are arranged in series and oriented in opposite directions.

The two transceiver units 100A and 100B of the optical module 1300 have the same configuration as shown in Fig.2. The light emitter 1120 is fabricated by the same method as in the optical module 100, except that the V grooves or trenches for the two transceivers 100A and 100B are formed on a single LE platform body 1121.

Further, similarly to the optical module 100, the optical module 1300 according to this embodiment can also be modified in various ways. These modification include, for example, the sharing of receiving and transmitting ICs (Fig. 14), the mounting of the transceiver ICs on the die pad (Fig. 15 and 16), the mounting of the PD platform on the LE platform, the integration of the PD platform and the LE platform (Fig. 19 and 20), the termination of the leads of the optical module package (Fig. 19 and 20), and the exposure of the die pad of the optical module in the package (Fig.22).

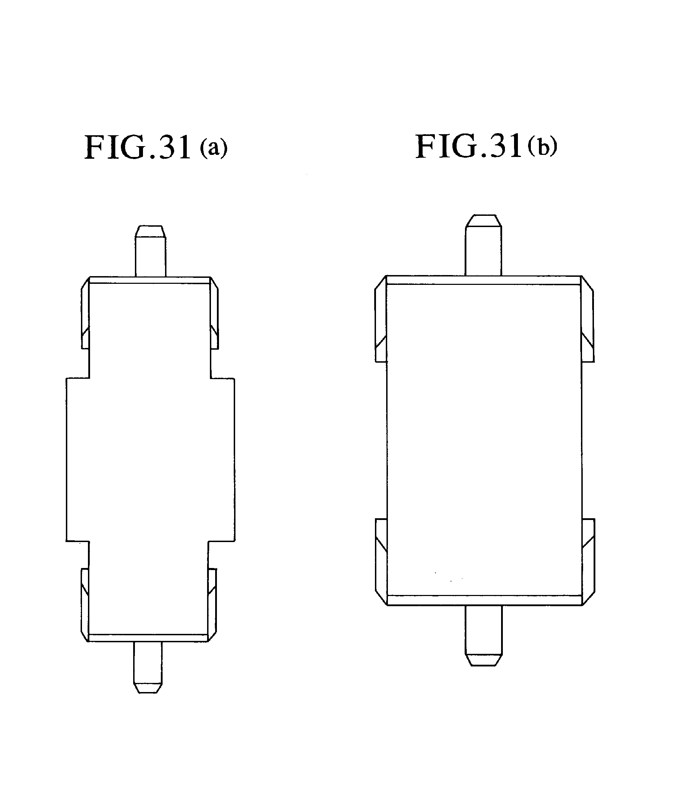

As shown in Fig.31 (a) and (b), the optical connector incorporating the optical module 1300 has substantially the same configuration as that of the optical connector 900 or optical connector 920 according to the above embodiments except that it has a symmetrical shape matched to the shape of the optical module 1300. The optical module 1300 can be mounted on a printed circuit board (Fig.25 and 26) or molded with resin (Fig.27 and 28) similarly to the optical module 1000 according to the above embodiment.

Fig. 32 is a perspective view schematically showing the structure of an optical module 1400 according to another preferred embodiment of the present invention. The optical module 1400 of this embodiment is finally encapsulated and main portions are covered with resin. The optical module 1400 is therefore shown with the resin removed in Fig. 32. Further, the transceiver ICS, leads and bonding wires are also omitted in Fig.32.

As shown in Fig.32, the optical module 1400 according to this embodiment has four transceiver units 100A, 100B, 100C and 100D arranged in two rows and two columns. In other words, the optical module 1400 is a combination of the optical module 100 shown in Fig.1 and the optical module 1300 shown in Fig. 1300. Each transceiver unit has he same constitution. The number of the transceiver units can be set freely as required. However, addition of transceiver units is possible only in the parallel direction (the X direction in the illustration) and not in the series direction (the Y direction in the illustration). Namely, 2xn number of transceiver units can be arrayed (where n is a positive integer).

The present invention has thus been shown and described with reference to specific embodiments. However, it should be noted that the present invention is in no way limited to the details of the described arrangements but changes and modifications may be made without departing from the scope of the appended claims.

For example, in the above embodiment, the PD platform and the LE platform are encapsulated in resin. However, the encapsulation material is not particularly limited and another material may be adopted.

In the embodiment shown in Fig.29 (b), each of the WDM filter, receiving photo-diode, light emitter and monitoring photo-diode is a single element common to all four transceiver units 100A-100D. However, each of these elements can be divided into two elements.
For example, the WDM filter can be divided into a first WDM filter common to the transceiver units 100A and 100B and a second WDM filter common to the transceiver units 100C and 100D.
Further, the photo-diode and light emitter can be divided into a first photo-diode array and a first light emitter array associated with the transceiver units 100A and 100B and a second photo-diode array and a second light emitter array associated with the transceiver units 100C and 100D.

As explained above, according to the present invention, it is possible to provide a multi-channel optical module which has two or more transceiver units in one package. It is therefore possible to miniaturize the overall size of an ONU or the like equipped with many optical modules, to improve the mounting efficiency, and to realize low cost. Moreover, since the PD platform and the LE platform are mounted on a die pad or a common platform after which these are encapsulated with an encapsulating member, the optical module can be mounted on a printed circuit board in substantially the same manner as an ordinary semiconductor device. Handling is therefore very simple. Further, since, unlike the conventional optical module, the optical module according to this invention does not require fine tuning by a skilled worker, it has high fabrication efficiency. In addition, the optical module of this invention can be realized at lower cost than the optical module including the conventional optical waveguide.

Further, if the LE platform is first mounted on the die pad and the PD platform is then mounted, the PD platform will not be affected by the heat imparted when the light emitters and the like are mounted on the LE platform body. Accordingly, temperature can be easily controlled at each process of the fabrication.

Furthermore, in fabricating the optical module of this invention, since the PD platform is mounted after mounting the LE platform on die pad and a screening test is then performed, it is not necessary to perform needless processing on a product in process which has an initial failure. This also helps to reduce manufacturing cost.

## Claims

1. An optical module for transmitting and receiving an optical signal comprising:
a die pad;
at least one platform body mounted on the die pad;
two or more transceiver units mounted on the platform body; and
an encapsulation member which covers at least part of the platform body and a part of the die pad;
wherein each transceiver unit includes
an optical fiber fixed on the platform;
a receiving photo-diode mounted that is on the platform body and transforms optical signals received through the optical fiber into electric signals;
a light emitter that is mounted on the platform body and generates optical signals to be transmitted through the optical fiber;
a filter provided so that the optical fiber is divided at a position between the receiving photo-diode and the light emitter; and
a ferrule in which the end of the optical fiber is inserted.

2. The optical module in accordance with Claim 1 further comprises
a silicon gel which covers at least a part of the optical fiber, the receiving photo-diode, the light emitter or the filter efficiently.

3. The optical module in accordance with Claim 1 or 2 further comprising:
one or more ICs which receive the output signals from the receiving photo-diode and process the output signals and/or drive the light emitter.

4. The optical module in accordance with any one of Claim 1 to 3, wherein the platform body includes a PD platform body on which the receiving photo-diode is mounted and an LE platform body on which the light emitter is mounted.

5. The optical module in accordance with Claim 4, wherein the transceiver unit further comprises a monitoring photo-diode which is mounted on the LE platform body and used for monitoring the luminescence intensity of the light emitter.

6. The optical module in accordance with any one of Claim 1 to 5, wherein at least two transceiver units among the two or more transceiver units are arranged in parallel and oriented in the same direction.

7. The optical module in accordance with Claim 6, wherein the PD platform body and the LE platform body are provided commonly for at least two transceiver units.

8. The optical module in accordance with any one of Claim 1 to 6, wherein at least two transceiver units among the two or more transceiver units are arranged in series and oriented in opposite directions.

9. The optical module in accordance with Claim 8, wherein the PD platform body is provided separately for each transceiver unit and the LE platform body is provided in common for the transceiver units.

10. The optical module in accordance with any one of Claim 1 to 9, wherein the filter consists of one filter common to the transceiver units.

11. The optical module in accordance with any one of Claim 1 to 10, wherein the receiving photo-diode is a photo-diode array common to the transceiver units.

12. The optical module in accordance with any one of Claim 1 to 11, wherein the light emitter is provided as a light emitter array common to the transceiver units.

13. The optical module in accordance with any one of Claim 4 to 12, wherein the monitoring photo-diode is a photo-diode array common to the transceiver units.

14. A method of fabricating an optical module for transmitting and receiving optical signals comprising the steps of
mounting on a die pad an LE platform equipped with at least a light emitter which generates optical signals to be transmitted;
mounting on the die pad or the LE platform a PD platform equipped with two or more optical fibers, at least one receiving photo-diode that performs photoelectric conversion of an optical signal received through the optical fibers, at least one filter that separates the optical signal received from the optical signal to be transmitted, and two or more ferrules in which the ends of the optical fibers are inserted, and
encapsulating the LE platform and the PD platform with an encapsulation member so that the ends of the ferrules are exposed.

15. The method of fabricating an optical module in accordance with Claim 14 further comprising a step of
performing a screening test after mounting the LE platform on the die pad, and mounting the PD platform on the die pad after that the screening test.

16. The method of fabricating an optical module in accordance with Claim 14 or 15 further comprising a step of
applying the silicon gel to cover at least a part of the optical fiber, the receiving photo-diode, the light emitter or the filter.
